# EUROPEAN PATENT APPLICATION

(11) **EP 0 770 963 A2**
(43) Date of publication of application: **02.05.1997**
(21) Application number: 96116803.6
(22) Date of filing: 18.10.1996
(51) Int. Cl.: G06F 17/22

(54) **Structured data and document processing apparatus and method**

(30) Priority: 19.10.1995 JP 296154/95
(71) Applicant: FUJI XEROX CO., LTD., Minato-ku, Tokyo (JP)
(72) Inventor: Hayashi, Koichi, Ashigarakami-gun, Kanagawa (JP)
(74) Representative: Hoffmann, Eckart, Dipl.-Ing.

(57) **Abstract**

A structured data or document processing system allows for recovery of an old document or collaborative writing without difficulties, even if authors edits a document at will without any limitation of editing. The system comprises a logical unit storing device (2) for storing a logical unit, which is either a content unit representing a portion of contents of a structured document represented as a tree structure or a reference unit representing the structure which directly descends from the reference unit in the structured document; a logical unit group storing device (3) for storing a logical unit group, which is a set of every logical unit which directly descends from one particular reference unit in the tree structure; the reference unit referencing a group set, which is a set of logical unit groups each of which is directly descending to the reference unit; a document editing device (5) for editing the structured document; a logical unit group creating device (6) for creating a new logical unit group in accordance with the editing of the structured document by the document editing device (5); and a reference associating device (7) for associating the logical unit group created by the logical unit group creating device (6) with the appropriate group set.

## Description

This invention relates to a document processing apparatus and method for creating, editing and storing documents of electronic data, and more particularly, a document processing apparatus and method to enable recovery of old versions of a document or smooth collaborative writing, even if each author is allowed to edit documents at will without any limitation on the document editing.

Commonly, when a set of document information represented as a file or the like, is repeatedly updated, an art which guarantees to retrieve the old state of a document satisfying a certain condition is called version management. The state of the old document is called a version. The version management enables recovery of the old states of a document and further supports collaborative writing carried out by a plurality of authors.

Conventionally, the version management is carried out for a unit, which is a set of information represented as a file or the like. When a plurality of authors collaborate in editing a file, the collaboration is managed under such restrictions as preventing the plurality of authors from writing to the same file at the same time.

When writing an extremely large size document, or when a document is being written by a plurality of authors, however, it is convenient to treat logical portions like chapters or sections as editing units of the document. Therefore, there are inventions which enable a plurality of authors to collaborate in writing, by defining the structure of a document, managing versions of every portion of the document independently, and setting an agreement to determine an assignment of each author, or setting a limitation to prohibit a plurality of authors from editing the same portion at the same time.

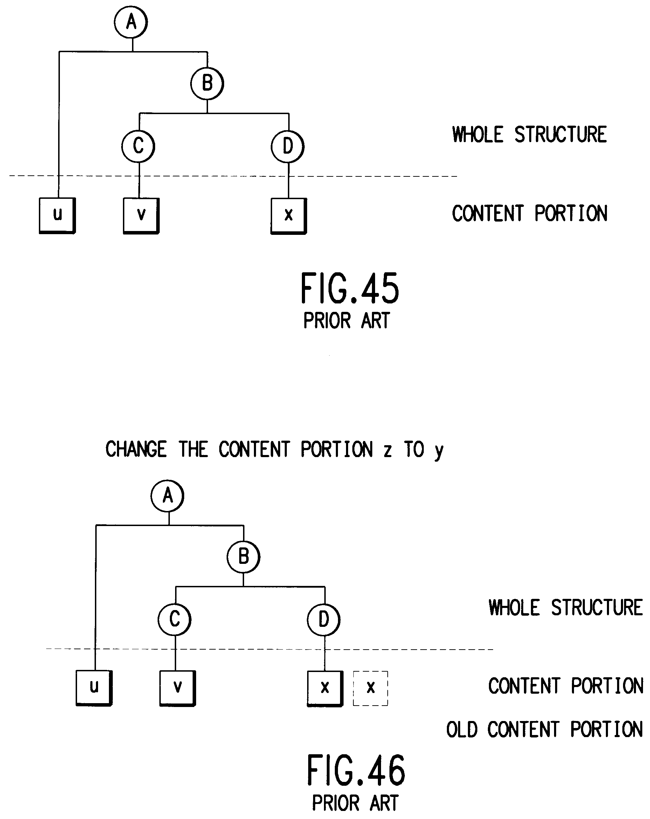

The conventional version management for a structured document is explained in detail by referring to Figs. 45 through 50.

The structure of a document is represented by an ordered tree structure, which includes nodes, each of which represents a partial unit such as a chapter or a section, and links, each of which represents a super-subordinate relationship between two nodes. Each leaf node of the tree includes content (data presented in the partial unit such as chapter or a section). That is to say, in the example of the document structure in Fig. 45, node A represents a root of the document, node B represents a chapter, nodes C and D represent sections, and leaf nodes (u), (v) and (x) represent content portions, each of which includes data content such as text.

Since a partial unit such as a chapter or a section is defined as a part relatively located in the whole structure of the document, if the whole structure of the document is changed, the unit of the version management becomes uncertain. For this reason, the conventional version management of the document structure fixes the whole structure of the document and provides the version management of the content portion.

Further, when the editing process, such as creating a new content portion and replacing the existing content portion by the created one, is carried out, as shown in Fig. 46, the existing content portion (x) is replaced by the new content portion (y), and the old content portion (x) is stored and managed with the position of the tree where it existed. To recover the old state of the document (the state before editing), the new content portion (y) is simply replaced by the old content portion (x) again. In this manner, the original objective of version recovery is accomplished.

For the reason of version unit uncertainty described above, the change of the whole structure of the document is not managed by the above-described version management. That is to say, if the whole structure of the document is changed, it is impossible to recover the old version document by the simple replacement of the old content portion with the new one as described above.

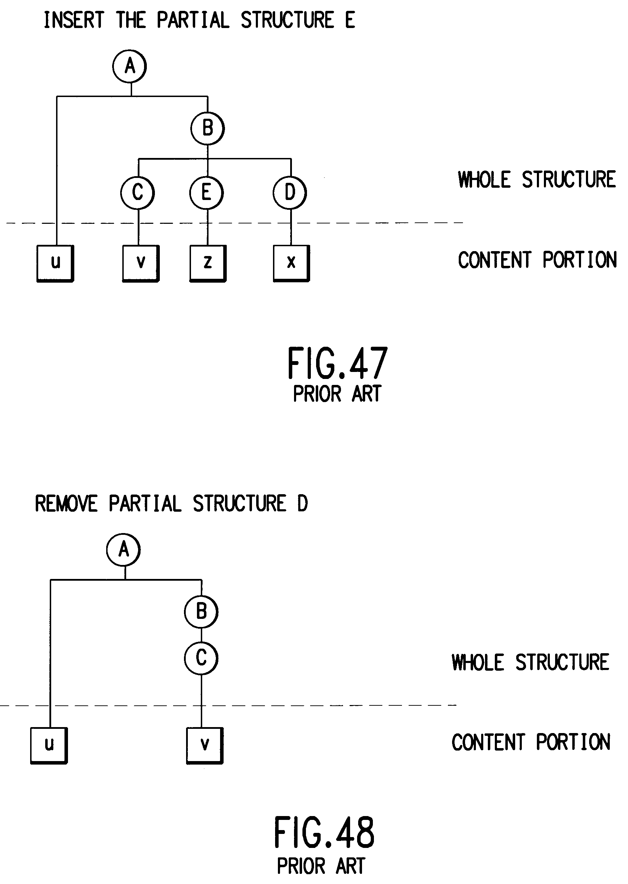

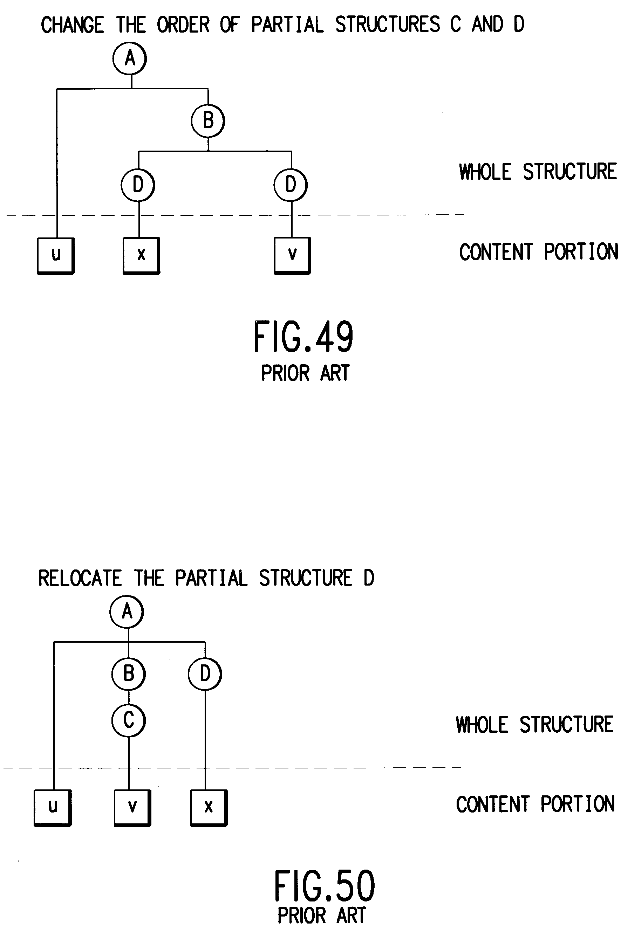

For instance, in the cases of editing illustrated in Figs. 47 through 49, the old state of the document is not recovered by the simple replacement of the content portions, because the whole structure of each document is changed. Fig. 47 shows a case of adding the content portion (z) as a new partial unit to the original document shown in Fig. 46 and of adding the partial structure (node) E corresponding to the added content portion (z) to the document structure. Fig. 48 shows a case of deleting the partial structure (node) D related to the content portion (x). Fig. 49 shows a case of alternating the order of the partial structure (node) C and the partial structure (node) D. Fig. 50 shows a case of moving the position of the partial structure (node) D corresponding to the content portion (x).

Japanese Patent Laid-Open No. Hei 6-35914 discloses a document preparation system to support collaboration in writing shared documents by using the version management of the content portions as illustrated with Fig. 46.

In this document preparation system, when a plurality of authors edits a content in the same node, a plurality of new version nodes, each of which corresponds to the content portion edited by the each author, are created. Each of the created content portions is managed by relating to the version node. Further, an access right is provided for each of the version nodes. When an author edits a content portion of the document structure, the content portion of the version node whose access right matches with the author is displayed and enabled to be edited by the author.

Japanese Patent Laid-Open No. Hei 7-44563 and Hei 6-131343 disclose a compound document processing system, which handles the compound document structure from which necessary document structures can be selected. The compound document structure of the document is represented by introducing compound nodes to the tree structure, which consist of nodes and links. When a plurality of partial structures including different contents can subordinate to the same super-ordinate structure, the shared node is compound and connected to these logical structures. Further, the attributes to identify the partial structures are appended to the compound node, and the tree structure corresponding to the required document structure can be selected from the plurality of the tree structures in accordance with the attributes.

This compound document processing system represents a document structure in a more manageable form than a system that simply divides the document structure into the whole structure and content portions. Further, the tree structure corresponding to the required document structure can be selected from the plurality of the tree structures, if necessary.

Thus, the conventional version management can recover old versions of a document, if the whole structure of the document is fixed. However, in practical document editing, as shown in Figs. 47 through 50, it is not the case that the whole structure of the document is changed as well as the content portion.

Further, in the process of practical document editing, as shown in the following examples (1) through (3), after the editing of the document, there are many cases where the document before editing needs to be recovered.

### (1) Retrieval of a document of a specific date

For instance, to retrieve an old document which is already deleted, recovery of the old version of the document which was edited at the designated date is occasionally needed.

### (2) Retrieval of a document used for the specific purpose.

For instance, recovery of a version of a document, such as an interim report, which is temporarily collected and distributed in the document writing process is occasionally needed.

### (3) Retrieval of a document updated by a specific person

For instance, in the case of a plurality of authors collaborating in writing a document, to check content of the document, recovery of a version before or after a specific author updated, is occasionally needed.

In conventional version management, however, the old document can be recovered on the assumption that the whole structure of the document is fixed. Thus, it is impossible to execute the recovery process as described above in the practical document processing operation.

In the prior art, by designating the versions of both the whole structure of the document and content portions, it is possible to recover the old structure of the document, even where both the whole structure and content portions of the document are changed at will. However, because the user must understand the complete record of the updating of the whole structure of the document and is forced to perform burdensome and complicated operations, it is not practical.

Furthermore, in the practical document writing process, because there are many cases where a change to a content portion assigned to one author causes changes to content portions assigned to other authors, it is desired that each author can change all content portions consistently. In other words, it could be necessary in the practical document writing process that a plurality of authors edits the same content portion at the same time, or one author changes the whole structure of the document without permission of the other authors.

As described above, it is desired that every old document of every author can be recovered, even though a plurality of the authors edits a document at will.

In conventional version management, however, because the old document is recovered on the assumption that the whole structure of the document is fixed, restrictions on editing are always imposed on each author and make the writing process complicated.

In the compound document processing systems described above (Hei 7-44563 and Hei 6-131343), it is possible to recover every old document of every author by designating the attributes which are appended to the nodes. However, the user must be responsible for which and how nodes are compound or how these nodes are identified. Thus, the user is forced to execute extremely complicated operations.

Furthermore, to support collaborative writing or to recover the version of a certain time, the compound document processing system provides the functions necessary to manage a plurality of documents which have partly different contents and are written by a plurality of authors.

Actually, to support collaborative writing or to recover the required version, however, complicated rules about the timing to compound nodes or the attribute to be appended to the compound node are needed. Thus, for practical use, extremely complicated operations and knowledge are required and the compound document processing system is not enough to support the recovery of version and collaborative writing.

The present invention has been made in view of the above conventional circumstances. It is therefore an aspect of the invention to provide a structured data or document processing system which realizes recovery of an old document or a collaborative writing without difficulties, even if authors edit a document at will without any limitation of editing.

It is a further aspect of the invention to provide a structured data or document processing system which recovers a requested old version of a structured document without difficulties, even if the whole structure of the document is changed.

It is still a further aspect of the invention to provide a structured data or document processing system which recovers an appropriate old version of a document by a users simple designating operation.

These and other aspects, features and advantages are accomplished by the invention disclosed herein. The system comprises logical unit storing means for storing a logical unit, which is either a content unit representing a portion of contents of a structured document represented as a tree structure or a reference unit representing a structure which directly descends from the reference unit in the structured document; logical unit group storing means for storing a logical unit group, which is a set of every logical unit which directly descends from a particular reference unit in the tree structure; a reference unit referencing a group set, which is a set of logical unit groups each of which directly descends from the reference unit; document editing means for editing the structured document; logical unit group creating means for creating a new logical unit group in accordance with editing of the structured document by the document editing means; and reference associating means for associating the logical unit group created by the logical unit group creating means with the appropriate group set.

Another document processing system of this invention comprises logical unit storing means for storing a logical unit, which is either a content unit representing a portion of contents of a structured document represented as a tree structure, or a reference unit representing a structure which directly descends from the reference unit in the structured document; logical unit group storing means for storing a logical unit group, which is a set of every logical unit which directly descends from a particular reference unit in the tree structure; a reference unit referencing a group set, which is a set of logical unit groups each of which directly descends from the reference unit; selection information associating means for associating the logical unit group with selection information used for selecting the logical unit group; selection condition designating means for designating a selection condition including the selection information associated with the logical unit group; logical unit group selecting means for selecting the logical unit group from the logical unit group storing means in accordance with the selection condition designated by the selection condition designating means and the selection information associated with the logical unit group by a logical unit group associating means; document constructing means for constructing the document in accordance with the logical unit group selected by the logical unit group selecting means.

Further, a data processing system of this invention, for processing structured data represented as a graph structure composed of at least one node and link, comprises node storing means for storing information of the node of the structured data; link storing means for storing link information representing the relation of adjacency between two nodes of the structured data; link association storing means for storing at least one link set, which is a set of every link which is started from a particular node and is related to a particular editing process, and information of positioning relation among every link in each link set; current structure constructing means for constructing current structured data to be processed by selecting one link set from a set of link sets each of which has a link whose starting node is the same; editing means for editing the link included in the current structured data constructed by the current structure constructing means; and registration means for creating a link set including the link edited by the editing means, and for registering the created link set into the link association storing means.

Selection information can be, for instance, version information, an update date or user information of a document.
Fig. 1 is a block diagram illustrating the document processing apparatus of an embodiment according to the present invention;
Fig. 2 illustrates an organization of stream sets;
Fig. 3 illustrates an example of a document structure;
Fig. 4 illustrates an example of the document structure whose content portion is altered;
Fig. 5 illustrates an example of the document structure to which a partial structure is inserted;
Fig. 6 illustrates an example of the document structure from which a partial structure is removed;
Fig. 7 illustrates an example of the document structure in which the order of the partial structures is changed;
Fig. 8 illustrates an example of the document structure in which a partial structure is relocated;
Fig. 9 illustrates the mechanism of the stream selection;
Fig. 10 is an example of sessions of document editing;
Fig. 11 is the document editor invoked in session 1;
Figs. 12A and 12B are the document editors used for the editing operation in session 1;
Fig. 13 is an example of the document structure created in session 1;
Fig. 14 is the tool of the storing process in session 1;
Fig. 15 is an example of the document structure stored in the memory in session 1;
Fig. 16A is the document holder in session 2;
Fig. 16B is the extraction condition setting tool in session 2;
Figs. 17A and 17B are the document editors used for the editing operation in session 2;
Fig. 18 is an example of the document structure created in session 2;
Fig. 19 is an example of the document structure stored in the memory in session 2;
Figs. 20A and 20B are the document editors used for the editing operation in session 3;
Fig. 21 is an example of the document structure created in session 3;
Fig. 22 is an example of the document structure stored in the memory in session 3;
Fig. 23 is the extraction condition setting tool invoked in session 4;
Fig. 24 is the document editor used for the editing operation in session 4;
Fig. 25 is the document structure created in session 4;
Fig. 26 is the tool of storing process in session 4;
Fig. 27 is an example of the document structure stored in the memory in session 4;
Figs. 28A and 28B are the document editors used for the editing operation in session 5;
Fig. 29 is an example of the document structure created in session 5;
Fig. 30 is an example of the document structure stored in the memory in session 5;
Figs. 31A and 31B are extraction condition setting tools invoked in session 6;
Figs. 32A and 32B are the document editors used for the reference operation in session 6;
Figs. 33A and 33B are examples of the document structure created in session 6;
Fig. 34 is the document editor used for the editing operation in session 7;
Fig. 35 is the tool of storing process in session 7;
Fig. 36 is an example of the document structure stored in the memory in session 7;
Fig. 37 is a flowchart illustrating an example of the procedure of the document extraction and display process;
Fig. 38 is a flowchart illustrating an example of the procedure of the lower level structure extraction and display process;
Fig. 39 is a flowchart illustrating an example of the procedure of the stream display process;
Fig. 40 is a flowchart illustrating an example of the procedure of the stream selection process;
Fig. 41 is a flowchart illustrating an example of the procedure of the document re-selecting and display process;
Fig. 42 is a flowchart illustrating an example of the procedure of the document storing process;
Fig. 43 is an example of the other forms of display of the document structure;
Fig. 44 is another example of the other forms of display of the document structure;
Fig. 45 illustrates the document structure according to the prior art;
Fig. 46 illustrates the document structure whose content portion is changed according to the prior art;
Fig. 47 illustrates the document structure into which a partial structure is inserted according to the prior art;
Fig. 48 illustrates the document structure from which a partial structure is deleted according to the prior art;
Fig. 49 illustrates the document structure in which the order of the partial structures is changed according to the prior art;
Fig. 50 illustrates the document structure in which a partial structure is relocated according to the prior art;

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

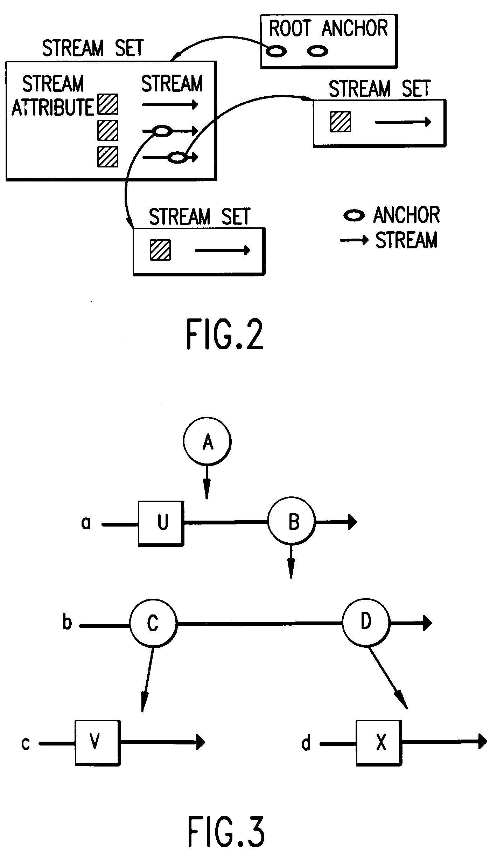

At the beginning of the explanation of a first embodiment of a document processing apparatus and method according to the present invention, a structure of a structured document and version management in this embodiment are explained with reference to Figs. 3 through 8.

In this embodiment, a content unit, which is a part of a structured document of tree structure, is called a content portion. A reference unit, which indicates a relative position of partial structures within a lower level of the structured document, is called an anchor. A unit including at least one content portion or an anchor is called a logical unit. A group of the logical units, which are positioned in a particular level of the tree structure, is called a stream. Selection information, which is used to select a group of the logical unit, is called a stream attribute.

This embodiment adopts the structured document represented as a tree structure composed of streams, and treats a stream as a unit of the version management, to deal with the whole structure and a partial structure of the document in the same manner. That is to say, this embodiment can carry out any editing operation of creating, changing or recovering document structures by combining primitive operations in association with general functions of manipulating the structure of a document and operations of creating appropriate content portions or appropriate streams. The primitive operation explained here includes, for instance, changing of a document content portion, insertion of a document content portion or a partial structure of the document, deletion of a document content portion or a partial structure of the document, changing of the order of document content portions or partial structures of the document.

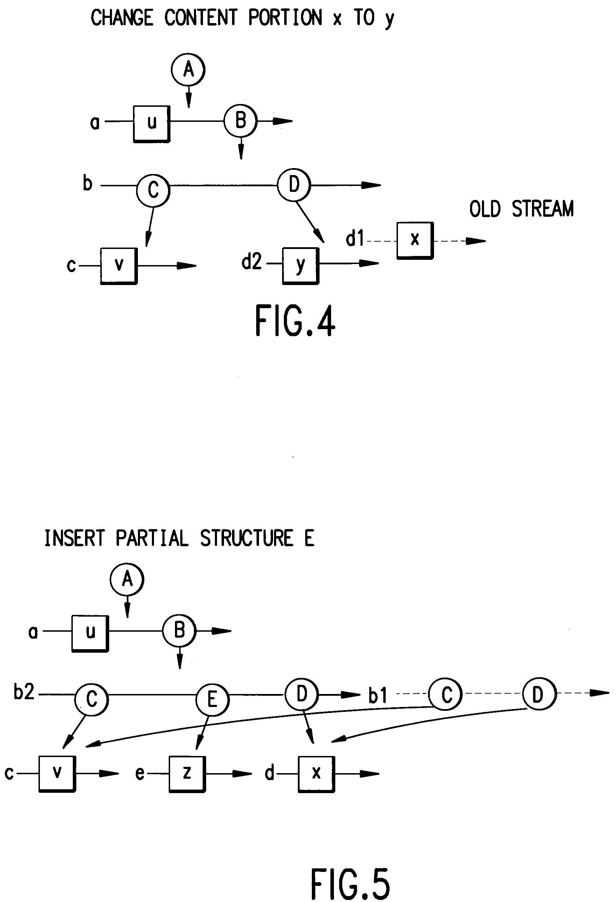

In the example of the document structure of Fig. 3, when selecting node A as the anchor indicating the root of the document, stream a including anchor B and content portion (u) is a chapter, stream b including anchors C and D is a section, and streams c and d including content portions (v) and (x), respectively, are paragraphs. When an editing process such as creating a new content portion and replacing an existing content portion is carried out, the content portions and the whole structure of the document are changed by stream unit manipulations as shown in Figs. 4 through 8.

Fig. 4 illustrates a case of changing the content portion of the original document shown in Fig. 3. This change creates stream d2 including new content portion (y), replaces existing stream d1 including content portion (x) by the stream d2, and stores and manages the old stream d1 and the new stream d2 as members of the set referenced by the anchor D.

Fig. 5 illustrates a case of inserting a new partial structure into the original document shown in Fig. 3. This insertion creates new stream b2 which adds anchor E to existing stream b1 which includes anchors C and D, creates new stream e including content portion (z), replaces the existing stream b1 by the new stream b2, and makes the anchors C, D and E included in the new stream b2 to reference streams c, d and e, respectively. In this case, streams b1 and b2 which are in a particular level and are referred by a particular anchor B are stored and managed as members of a set referenced by the anchor B.

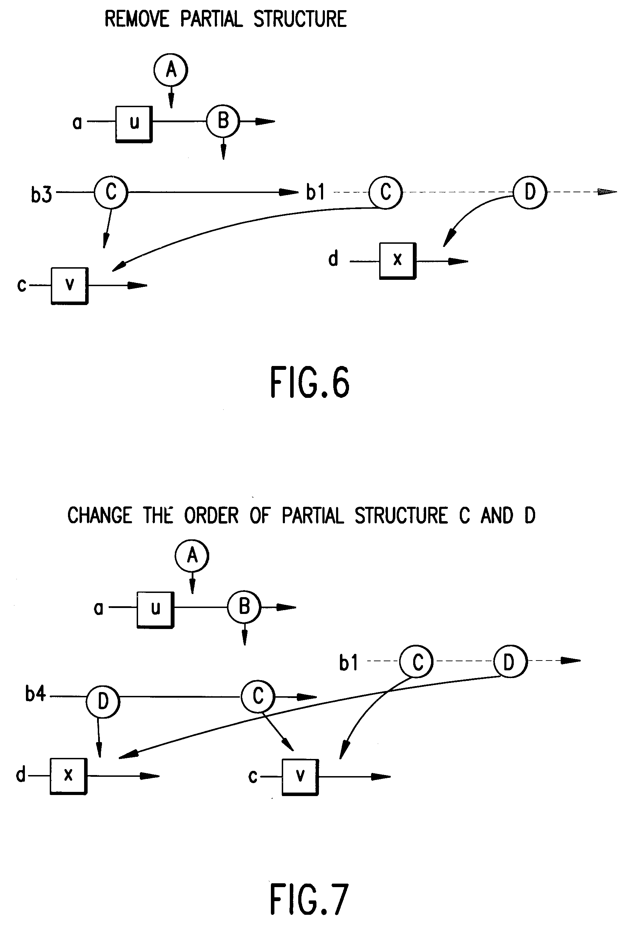

Fig. 6 illustrates a case of removing existing partial structure D from the original document shown in Fig. 3. This removal creates new stream b3 including only anchor C by deleting anchor D from existing stream b1 which includes anchors C and D, replaces the existing stream b1 by the new stream b3, stores and manages the old stream b1 and the new stream b3 as members of a set referenced by anchor B, makes the anchor C in the new stream b3 reference stream c and stores and manages stream d as the stream referenced by the anchor D in the old stream b1.

Fig. 7 illustrates a case of changing an order of the partial structures C and D in the original document shown in Fig. 3. This changing of the order creates new stream b4 including anchors D and C (in this order) by changing the order of the anchors C and D which existing stream b1 includes, replaces the existing stream b1 by the new stream b4, and stores and manages the old stream b1 and the new stream b4 as members of a set referenced by anchor B.

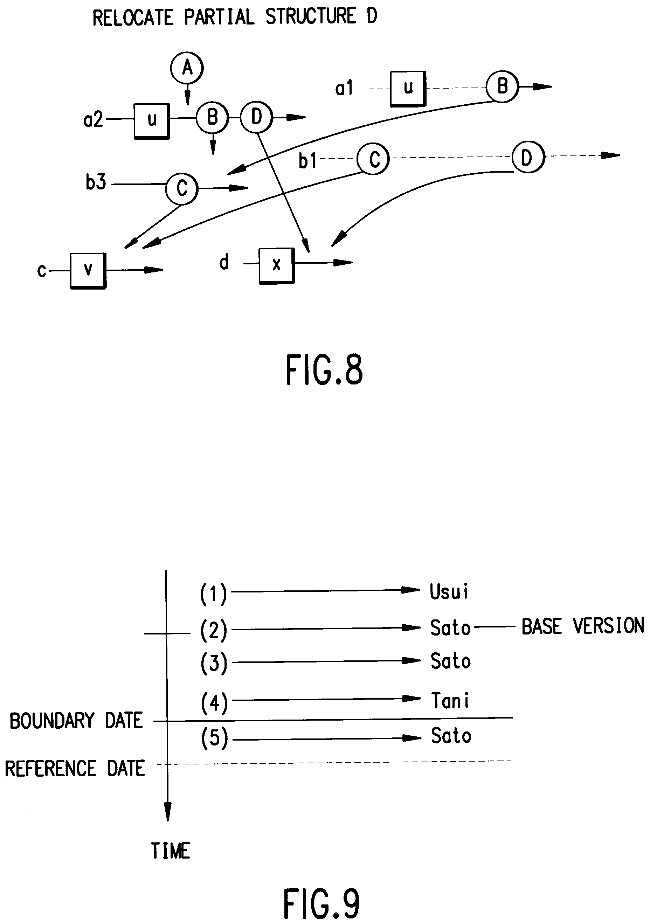

Fig. 8 illustrates a case of relocating partial structure D in the original document shown in Fig. 3. This relocation creates new stream b3 including anchor C by removing anchor D from existing stream b1 which includes anchors C and D, replaces the existing stream b1 with the new stream b3, creates new stream a2 by adding anchor D to existing stream a1 including content portion (u) and anchor B, replaces the existing stream a1 by the new stream a2, and makes the anchor D keep the reference to stream d. In this case, every stream referenced by anchor A, namely streams a1 and a2, are stored and managed as members of a set referenced by the anchor A. In this case, every stream referenced by anchor B, namely b1 and b3, are stored and managed as members of a set referenced by the anchor B.

As described above, a stream after editing and a stream before editing are stored into a particular set, and an anchor references the set of the streams. Therefore, as described later, an old version of a document before editing can be recovered by selecting a stream which satisfies given conditions from the set referenced by each anchor and assembling the selected streams into a document.

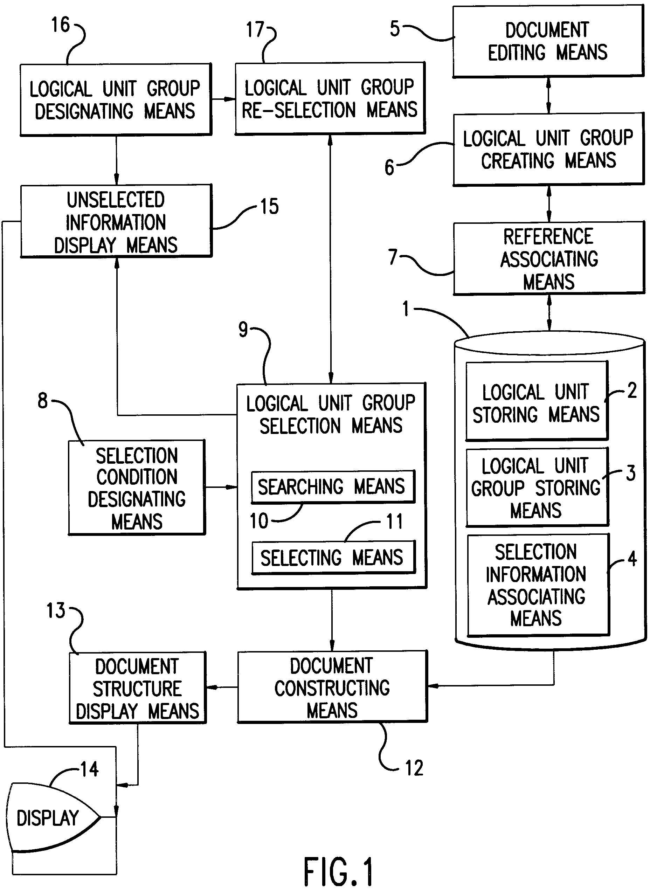

Fig. 1 shows a block diagram of the document processing apparatus in the first embodiment, which carries out document processing as described above.

Memory 1, which is made of such as semi-conductor memory or magnetic memory, includes logical unit storing means 2, logical unit group storing means 3 and selection information associating means 4. These means numbered from 2 to 4 store and manage information which constructs structured documents.

The logical unit storing means 2 stores logical units. Each logical unit is either an anchor or a content portion. The logical unit group storing means 3 stores streams. Each stream consists of logical units.

The selection information associating means 4 associates a stream stored in the logical unit group storing means 3, with stream attributes used when selecting a stream. That is, by designating values of stream attributes, the stream corresponding to the designation can be selected from the logical unit group storing means 3.

In other words, the structured document, as shown in Fig. 2, is stored in the memory 1 in the form of a data structure composed of streams, to each of which is attached the stream attribute. In the following explanation of this embodiment, a stream set is defined as a set including a plurality of streams. The stream set includes a plurality of combinations of the stream and stream attributes, when they are referenced by the same anchor. It implies they lay in the same level of a document structure. A top level node of the document structure is called a root anchor. A tree structure is extracted by traversing the structure composed of the stream sets according to the reference of the anchors, such that the root anchor references a lower level stream set, then the anchor included in the lower level stream set references a further lower level stream set.

Document editing means 5 applies an editing procedure to the structured documents stored in the memory 1 in accordance with a user's commands, and changes content portions and partial structures (streams) as shown in Figs. 4 through 8.

Logical unit group creating means 6 carries out a process of creating a new stream in accordance with the editing process by the document editing means 5. For instance, as shown in Fig. 4, when content portion (x) is replaced by content portion (y), the logical unit group creating means 6 creates a new stream d2 including content portion (y).

The reference associating means 7 carries out a process of adding the new stream created by the logical unit group creating means 6 into a particular set which includes the edited original stream, and stores the added set into the logical unit group storing means 3. For instance, as shown in Fig. 4, when new stream d2 is created as a result of an editing operation on the existing stream d1, the stream d2 is added into the same set (stream set) that includes the stream d1.

Selection condition designating means 8 has input means such as a keyboard or a mouse to be operated by a user. It receives a selection condition including a stream attribute from the user through the input means, and transfers the received selection condition to logical unit group selection means 9. As types of attributes, this embodiment allows version information, updating date information and user information of a document. A selection condition described with these stream attributes is transferred to the logical unit group selection means 9.

The logical unit group selection means 9 carries out a process of selecting a stream which satisfies the selection condition inputted from the selection condition designating means 8, from the logical unit group storing means 3. The logical unit group selection means 9 has searching means 10 and selecting means 11 to carry out the selection process.

The searching means 10 searches the streams stored in the logical unit group storing means 3 for the stream which satisfies the selection condition. The selecting means 11 selects a stream from the streams satisfying the selection condition, which are found by the searching means 10. For instance, when a version, a date and a user of a document are designated as a selection condition, the searching means 10 searches for streams associated with the stream attribute where updating date information is after the updating date corresponding to the designated version and before the designated date, and user information matches with the designated user. The selecting means 11 selects the latest stream from streams satisfying the selection condition, which are found by the searching means 10.

If the searching means 10 fails to find a stream which satisfies all of the condition, the selecting means 11 selects a stream satisfying the version condition.

Document constructing means 12 constructs a document from streams selected by the logical unit group selection means 9. Document structure display means 13 displays the document constructed by the document constructing means 12 on a display 14.

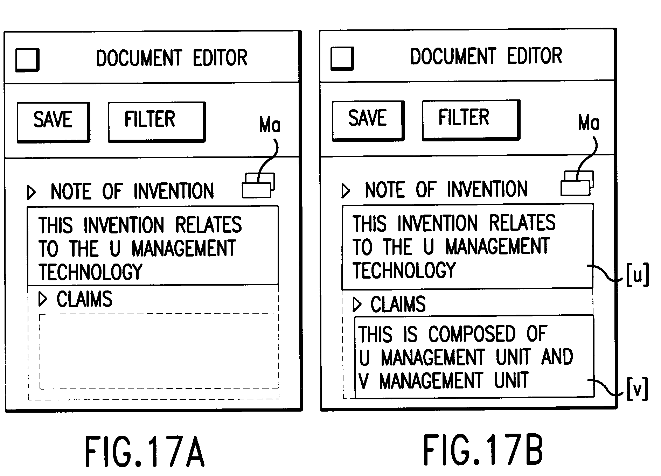

Unselected information display means 15 displays a marker on the display 14. The marker indicates the stream which the document structure display means 13 does not select as a constituent of the document. That is to say, when a stream set which includes the stream selected by the logical unit group selection means 9 includes other streams, a marker, which indicates the other streams, is displayed with the document constructed by the document constructing means 12 on the display 14, as shown in Figs. 17A and B.

Logical unit group designating means 16 has input means such as a keyboard or a mouse to receive a user's input, and designates a marker from the markers displayed by an unselected information display means 15 in accordance with the user's input.

In accordance with the designation of the marker by the logical unit group designating means 16, logical unit group re-selection means 17 makes the logical unit group selection means 9 replace the stream which was formerly selected by the logical unit group selection means 9 with the stream corresponding to the designated marker. That is to say, when a content portion (text) in a stream is displayed as a portion of a document structure accompanying a marker on the display 14, selection of the marker causes display of a content portion (text) of another stream, which is replaced with the former stream. If structural properties of the stream associated with anchors, such as the number or position of anchors is different from that of the stream before the replacement, the whole structure of the displayed document is accordingly changed.

Here, the above-described selecting process in accordance with the selection condition, which is carried out by the logical unit group selection means 9 is explained in detail with reference to Fig. 9.

Fig. 9 shows streams (1) through (5) along the vertical axis indicating dates. Each stream is associated with attributes including user information, which represents a name of a user such as "Usui", "Sato", or "Tani", updating date information and version information. The selection condition to be input includes boundary date information, base version information and user information. The boundary date information and base version are used for determining the scope of documents to be referenced and processed.

This example illustrates the selecting process when the user "Usui" actually references a document at a date shown as the dotted line in the figure.

If nothing is designated as the selection condition, the process selects stream (5), which is the latest at the referring date.

If only user information "%user" (in this case, it means "Usui") is designated, the process selects stream (1), which is the latest stream whose stream attribute is "Usui".

If only user information "Sato" is designated, the process selects stream (5), which is the latest stream whose stream attribute is "Sato".

If only the boundary date shown in the figure is designated, the process selects stream (4), which is the latest stream whose updating date of the stream attributes is before the designated boundary date.

If the boundary date shown in Fig. 9 and "Sato" are designated as boundary date information and user information, the process selects stream (3), which is the latest stream whose user information in the stream attributes is "Sato" and whose updating date is before the boundary date.

If only a base version shown in the figure is designated, the process selects stream (5), which is the latest stream after the base version was defined.

If both of the base version and the boundary date shown in the figure are designated as the selection condition, the process selects stream (4), which is the latest stream after the base version and before the boundary date.

If the base version shown in the figure and "%first" are designated as the base version information and boundary date information, the process selects stream (2), which is the first stream after the base version information was defined.

If the base version shown in the figure and "%user" are designated as the base version information and the user information, the process selects stream (2), which is associated with the base version, because there is no stream whose stream attribute includes "Usui" after the base version was defined.

As described above, the stream which satisfies the selection condition designated by the selection condition designating means 8, is selected in accordance with the stream attribute. Then the document constructing means 12 constructs a document structure of the selected streams.

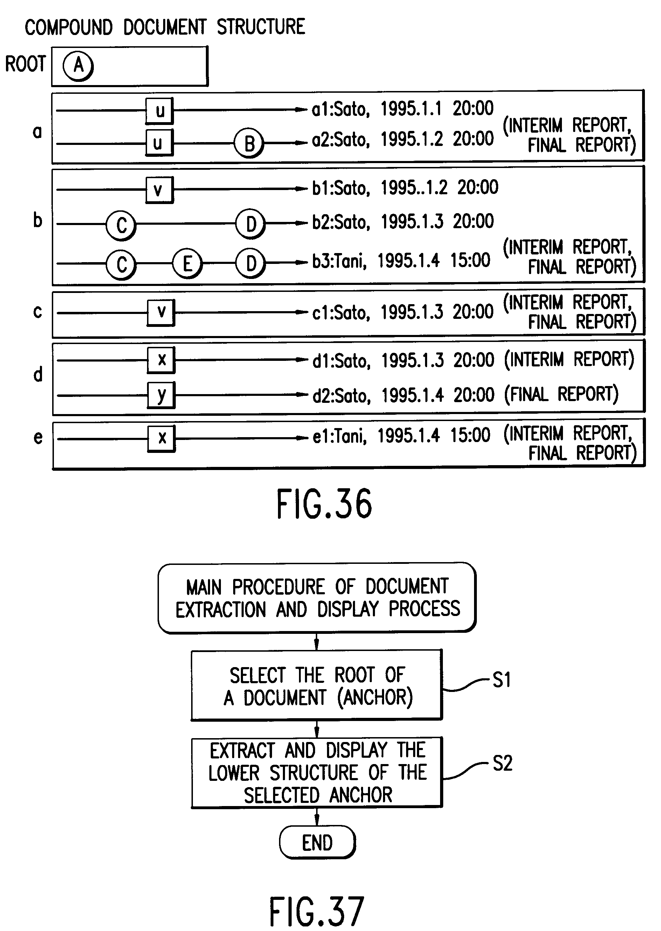

Next, an outline of a document editing process which is carried out by the document processing apparatus of the above-described configuration, is explained by using an example shown in Figs. 36 through 40. The following explanation further clarifies the function of each means described above in detail.

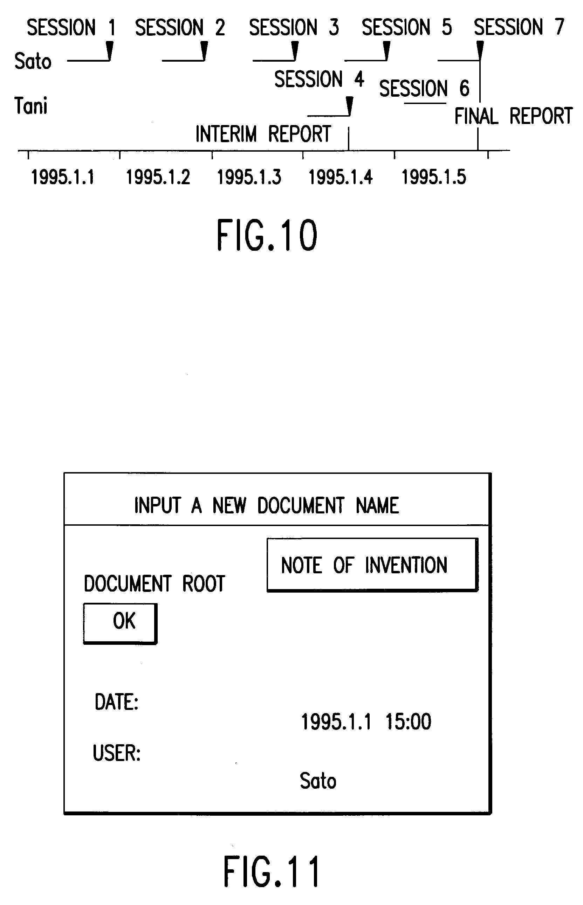

Fig. 10 shows an editing process in which Mr. Sato and Mr. Tani collaborate in writing a document whose name is "Note of invention". Each editing operation from the start to the end is named a session. The editing operation starts with opening a document by using a document editing tool and ends with closing the document.

In Fig. 10, time is on the horizontal axis. Each of sessions 1 through 7 is represented by a horizontal line corresponding to the author "Sato" or "Tani". The black triangle at the end of each line indicates a time that the document is stored. A vertical line started from a triangle indicates that a version name is defined. For instance, in session 4, the document is stored on January 4, 1995, and version name "interim report" is defined.

In this example, no two sessions are carried out at any one time to avoid making the explanation too complicated. But there is no difficulty applying this invention to a case where a plurality of sessions overlap with each other.

Figs. 11 through 15 illustrate session 1. In session 1, the user Mr. Sato creates and stores the new document "Note of invention".

At the beginning, when Mr. Sato invokes the document editor of the document editing means 5 at 15:00 on January 1, 1995, an interface tool shown in Fig. 11 is displayed on the display 14, and prompts the user to input a new document name. With the interface tool, Mr. Sato inputs "Note of invention" as the name of the document root and clicks an "ok" button to instruct the end of the designation. These instructions designate a root anchor, which starts the extracting of a document. The root anchor references a stream set which includes a first level stream of the document structure.

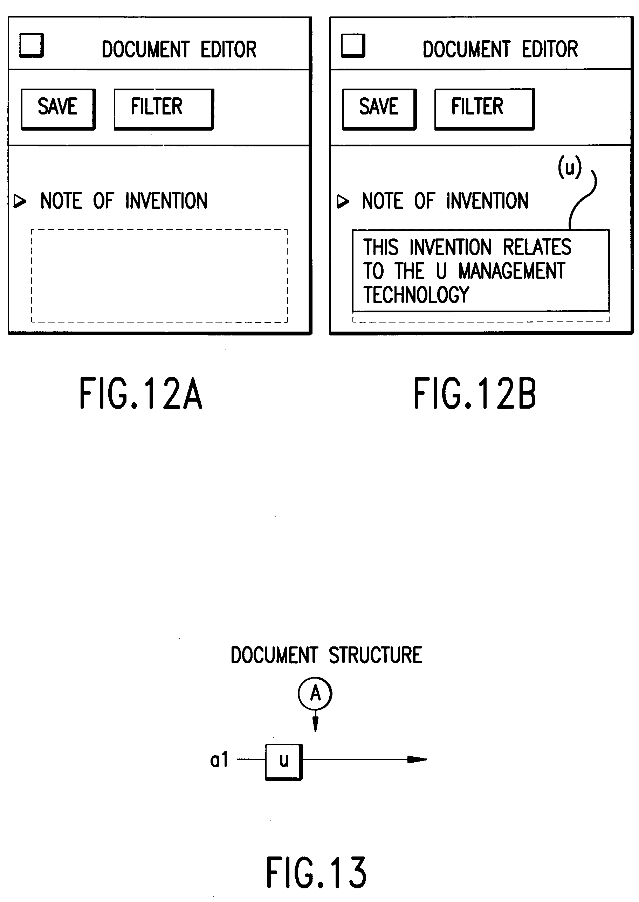

Next, the document editor displays an extracted document structure on the display 14, as shown in Figs. 12A and 12B. The display of the document structure comprises a white triangle marker which represents a position of an anchor, name of the anchor, and content portion of a stream referenced by the anchor. The depth of the indent of the marker, which represents the position of the anchor, represents a depth of a level of the stream in the document structure. Thus, if the anchor references a lower level stream, it is indented further to the right.

When the stream referenced by the anchor whose name is "Note of invention" does not yet include any content portion (contents of the text), the editor displays root anchor name "Note of invention" and the empty stream referenced by the anchor is displayed in the form of a display area enclosed with a dotted line, as shown in Fig. 12A.

Mr. Sato writes text as the content portion (u) of the stream referenced by the root anchor by the editing operation, then the editor displays the contents of the text in the above-described display area as shown in Fig. 12B. As a result of the editing, the logical unit group creating means 6 creates stream a1 which only includes the new content portion (u) and the document structure that the root anchor A references stream a1, is constructed as shown in Fig. 13.

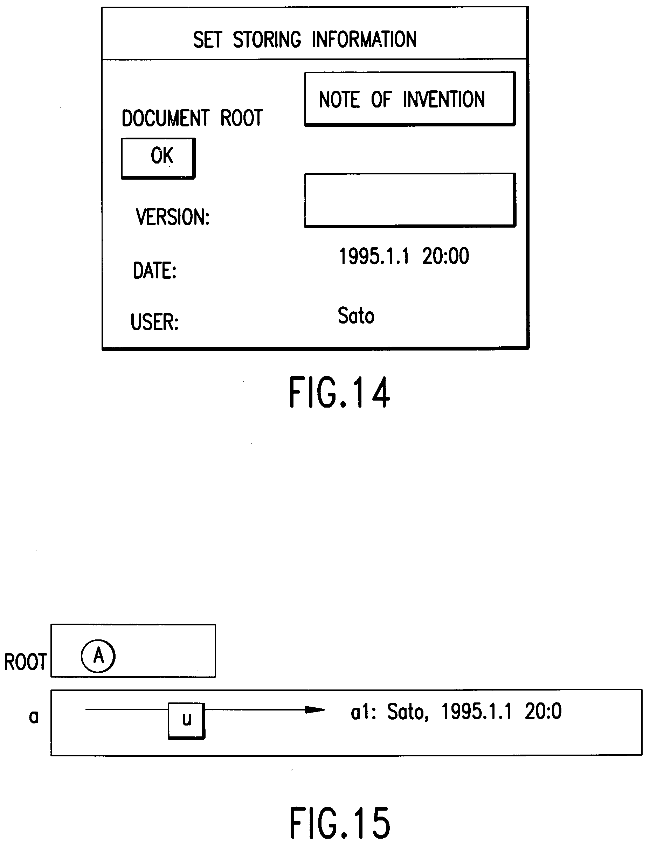

When Mr. Sato stops editing and instructs to store the document by clicking a "save" button on the document editor shown in Fig. 12B at 20:00 on January 1, 1995, an interface tool shown in Fig. 14 is displayed on the display 14 and prompts the user to set storing information. In this example, Mr. Sato clicks the "ok" button without setting additional storing information to instruct to store the created document. This interface tool has displayed the root anchor name "Note of invention" as the document root, which is a piece of storing information.

As a result of the storing process, a document structure shown in Fig. 15 is stored in the memory 1. That is to say, root anchor A, stream set a referenced by the root anchor A, stream a1 included in the stream set a and the content portion (u) included in the stream a1 are created. Further, the selection information associating means 4 associates stream attributes including "Sato", which indicates the user who edits the document, and "1995. 1. 1. 20:00", which is the date of storing (updating) the data, with the stream a1.

Next, in session 2 shown in Fig. 10, Mr. Sato edits the document "Note of invention", which he created in session 1, and stores the edited document to the memory 1.

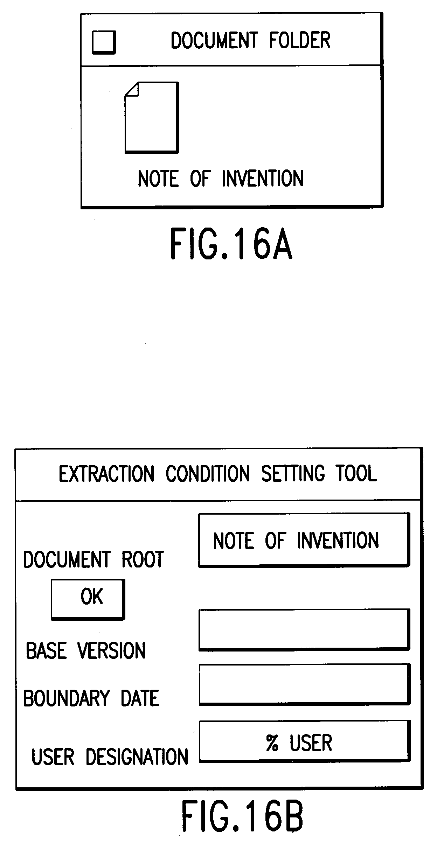

At the beginning, a document folder as shown in Fig. 16A is displayed on the display 14. At 15:00 on January 1, 1995, Mr. Sato selects an icon "Note of invention" in the document folder by double-clicking it, then the document editor of the document editing means 5 is invoked. As a result, an extraction condition setting tool shown in Fig. 16B is displayed on the display 14 and prompts the user to designate an extraction condition. When Mr. Sato inputs "%user", which is the variable representing the current user, as the user information and clicks the "ok" button to terminate the designation process by the selection condition designating means 8, the editing process starts. The symbol "%" in "%user" or "%first" indicates that they are variables whose values are calculated and determined at the beginning of the document extraction.

The above-described designation indicates that the user desires to extract a document including the latest portion (stream) updated by the user himself for the current editing process. As shown in Fig. 17A, the document editor extracts the document structure stored in session 1 from the memory 1, and displays it.

Next, Mr. Sato edits the extracted document. That is, as shown in Fig. 17A, he adds "claims" as an anchor to the stream referenced by the root anchor "Note of invention", and writes text as a content portion (v) of the stream referenced by the anchor "claims". Then the text is displayed in the area referenced by the anchor "claims" as shown in Fig. 17B.

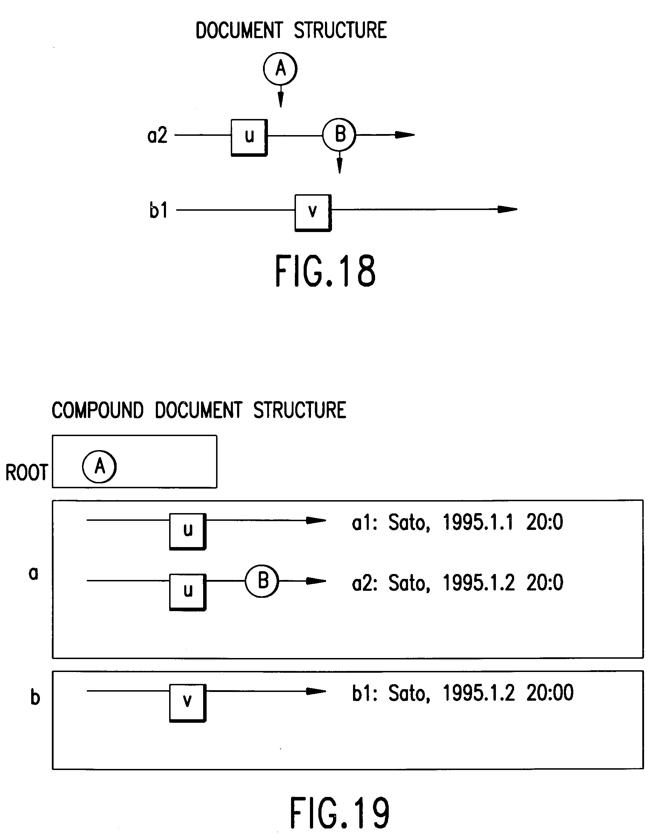

As a result of the editing, as shown in Fig. 18, the logical unit group creating means 6 creates new stream a2, which is referenced by the root anchor A and includes content portion (u), anchor B, and the stream b1, which is referenced by the anchor B and includes content portion (v).

Furthermore, the unselected information display means 15 displays alternative marker Ma on the display of the document editor as shown in Figs. 17A and 17B. This indicates that the stream set referenced by the anchor A includes streams other than the stream displayed on the display as alternatives to construct a document. In this case, streams a1 and a2 are the alternatives for the stream referenced by anchor A. When one of them is displayed, the other is displayed as marker Ma.

Next, Mr. Sato stops editing and instructs to store the document by clicking the button "save" on the display of the document editor shown in Fig. 17B at 20:00 on January 2, 1995. Then the interface tool (as shown in Fig. 14) is displayed on the display 14 and prompts the user to set storing information. When Mr. Sato instructs to store the document in the same manner as session 1, a document structure shown in Fig. 19 is stored to the memory 1.

Thus, the document structure has root anchor A, stream set a referenced by the root anchor A, streams a1 and a2 included in the stream set a, and stream set b referenced by the anchor B. Further, the selection information associating means 4 associates the stream attribute including user information "Sato" and data storing (updating) date information "1995. 1. 1. 20:00" with stream a1, the stream attribute including user information "Sato" and data storing (updating) date information "1995. 1. 2. 20:00" with stream a2, and the stream attribute including the user information "Sato" and data storing (updating) date information "1995. 1. 2. 20:00" with stream b1.

Next, in session 3 shown in Fig. 10, Mr. Sato further edits the document "Note of invention", which he created in session 2, and stores the edited document to the memory 1.

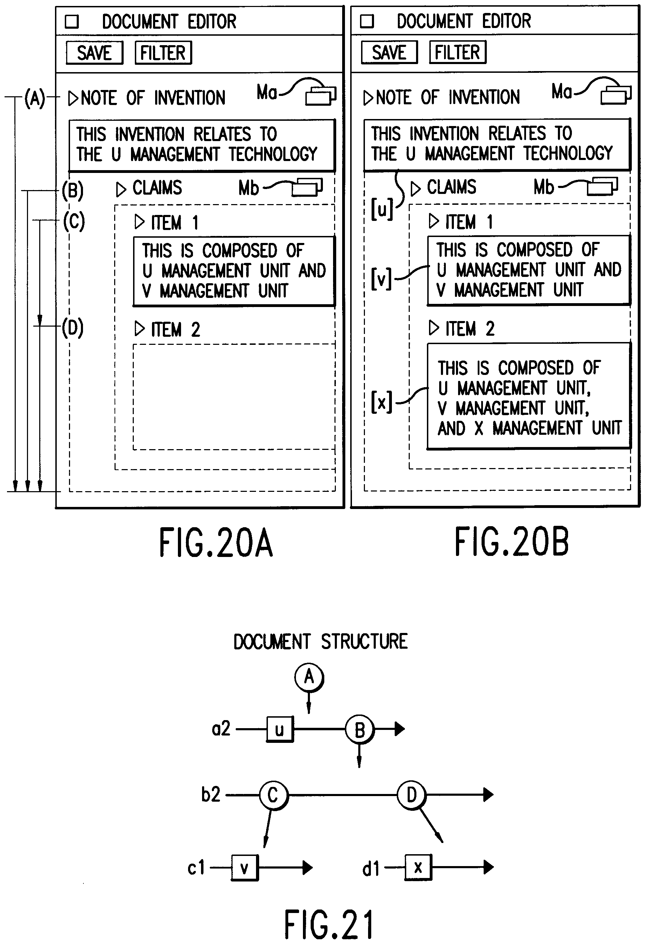

At the beginning, in the same manner as in session 2, Mr. Sato starts editing the document "Note of invention" at 15:00 on January 3, 1995. Then the document editor extracts the document structure which is stored in session 2 from the memory 1, and displays the extracted document as shown in Fig. 20A on the display 14.

In this editing process for the displayed document, as shown in Fig. 20A, Mr. Sato adds "item 2" into the display area of "claims". Then the logical unit group creating means 6 creates a stream which includes anchor C for "item 1" and anchor D for "item 2" and is referenced by anchor B for "claims". When Mr. Sato writes text in "item 2" as shown in Fig. 20B, the logical unit group creating means 6 creates a stream which includes content portion (x) including the written text and is referenced by anchor D.

As described above, as shown in Fig. 21, stream a2 which is referenced by the root anchor A and includes content portion (u) and anchor B, stream b2, which is referenced by the anchor B and includes anchors C and D, stream c1, which is referenced by the anchor C and includes content portion (v), and stream d1, which is referenced by the anchor D and includes content portion (x) are displayed on the display of the document editor.

Further, because the above-described editing process creates a plurality of alternatives for the streams referenced by the anchor B, the marker Mb indicating streams b2 and b1, which is unselected, is displayed as shown in Figs. 20A and 20B.

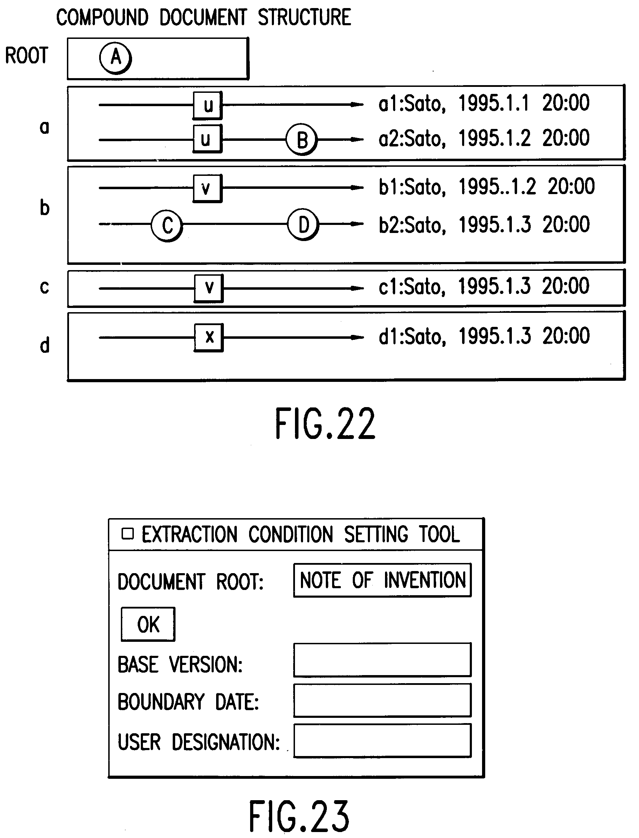

Next, Mr. Sato stops editing and instructs to store the document in the same manner as session 2 at 20:00 on January 3, 1995. Then, a document structure shown in Fig. 22 is stored to the memory 1.

Thus, stream b2, which includes anchors C and D, is added to the stream set b in the document structure shown in Fig. 19. Further stream set c referenced by the anchor C, stream c1 included in the stream set c and having content portion (v), stream set d referenced by the anchor D, and stream d1 included in the stream set d and having content portion (x) are added to the document structure shown in Fig. 19. Furthermore, the selection information associating means 4 associates the stream attribute including the user information "Sato" and the data storing (updating) date information "1995. 1. 3. 20:00" with each of the added streams b2, c1 and d1.

Next, in session 4 shown in Fig. 10, Mr. Tani edits the document "Note of invention", which is created by Mr. Sato in session 3, and stores the edited document as a version "interim report".

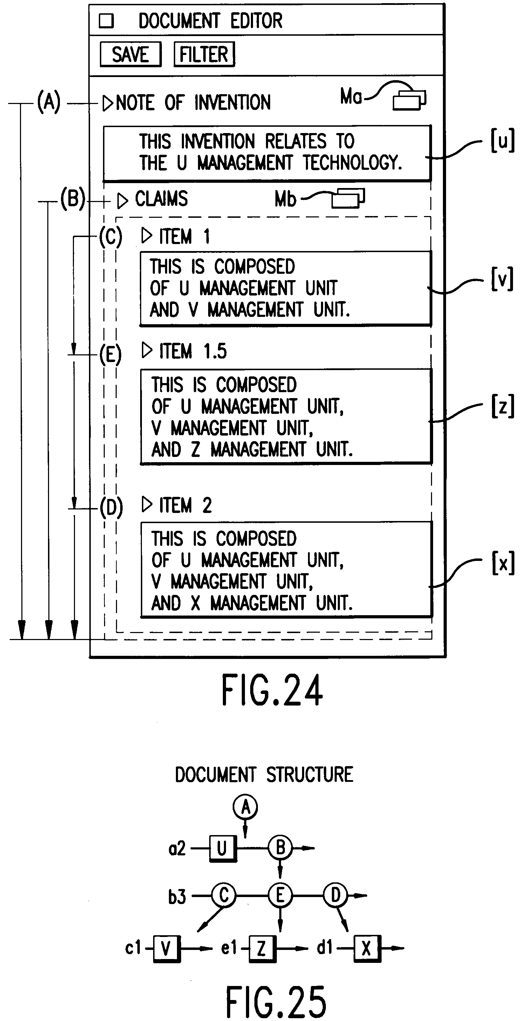

At the beginning, when Mr. Tani starts editing in the same manner as session 2 at 10:00 on January 4, 1995, the extraction condition setting tool as shown in Fig. 23 is displayed on the display 14. Then Mr. Tani designates nothing for the extraction condition and clicks the button "ok" to make the document editor (as shown in Fig. 24) display and carry out the editing operation.

This way, if editing starts without designating conditions, the latest document is extracted from the memory 1 for editing regardless of the user. If Mr. Tani inputs "%user" as the condition to designate the user information through the selection condition designating means 8 same as Mr. Sato did, no document is extracted, because Mr. Tani did not update the document before.

The document editor extracts the document structure stored in session 3, and displays the extracted document structure. As shown in Fig. 24, Mr. Tani edits the document by adding "item 1.5" between "item 1" and "item 2" as a stream referenced by anchor B for "claims".

As a result of the editing, as shown in Fig. 25, the logical unit group creating means 6 creates new stream b3 referenced by the anchor B and including anchors C, D, and E, and new stream e1 referenced by the anchor E and including content portion (z) for "item 1.5".

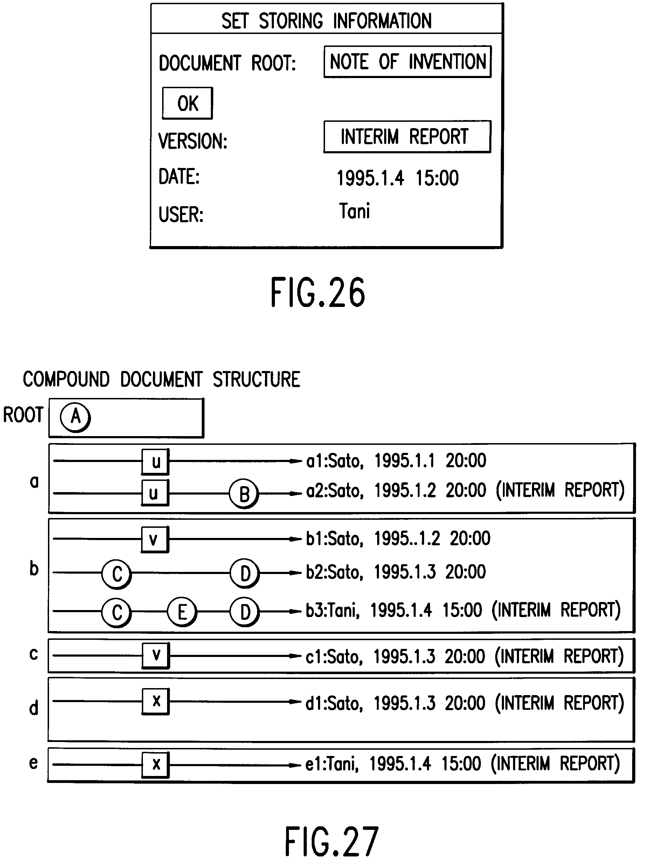

Next, Mr. Tani stops editing and instructs to store the document at 15:00 on January 4, 1995, by clicking the button "save" on the document editor. Then the interface tool shown in Fig. 26 is displayed on the display 14, and prompts the user to designate storing information. Then Mr. Tani designates "interim report" for version information, and clicks the "ok" button to instruct to store a created document.

As a result of the storing, a document structure shown in Fig. 27 is stored in the memory 1. Thus, new stream set b3 including anchors C, D and E is added to the stream set b referenced by the anchor B in the document structure created in session 3. Further, stream set e referenced by the anchor E and new stream e1 included in the stream set e are added to the document structure created in session 3.

Furthermore, the selection information associating means 4 associates a stream attribute including "Tani", which is the information of the user who edited the document, "1995. 1. 4. 15:00", which is a date of storing (updating) the data, and version information "interim report", with each of the streams b3 and e1 created by the editing process. The selection information associating means 4 further associates the version information "interim report" with the streams a2, c1 and d1 which are referred during the Mr. Tani's editing process.

Next, in session 5 shown in Fig. 10, Mr. Sato further edits the document "Note of invention", which he created, and stores the edited document. Before Mr. Sato starts this editing, Mr. Tani added some change to the document structure in session 4. But Mr. Sato can restart editing the document which Mr. Sato edited and stored by designating an appropriate extraction condition.

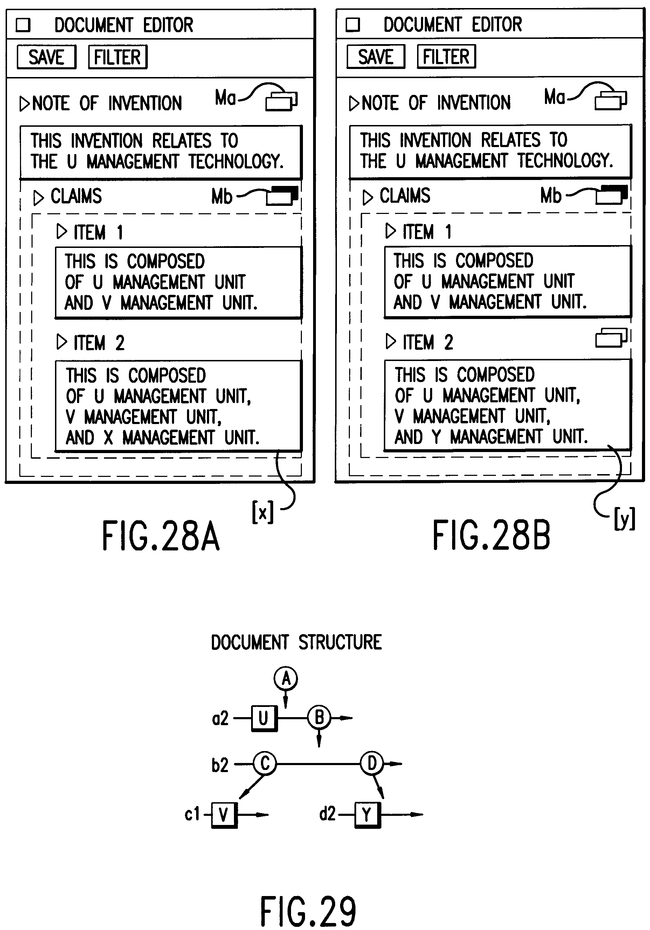

In the same manner as session 2, Mr. Sato invokes the document editor at 15:00 on January 4, 1995. In this time, Mr. Sato inputs "%user" as the extraction condition through the extraction condition setting tool of the selection condition designating means 8. This input causes the logical unit group selection means 9 to select stream b2 created by Mr. Sato instead of stream b3 created by Mr. Tani, as the stream referenced by the anchor B for "claims". Then the document editor displays the document structure which was stored by Mr. Sato in session 3, as shown in Fig. 28A.

Further, in this case, the marker Mb is inverted on the display, which shows that there is a newer stream than the stream which is currently referenced by the anchor B for "claims".

In this editing process of the document, Mr. Sato changes content portion (x) for "item 2" to content portion (y) as shown in Fig. 28B. As a result of this change, as shown in Fig. 29, the logical unit group creating means 6 creates new stream d2 in which the content portion (x) is replaced by the content portion (y), as the stream referenced by anchor D for "item 2".

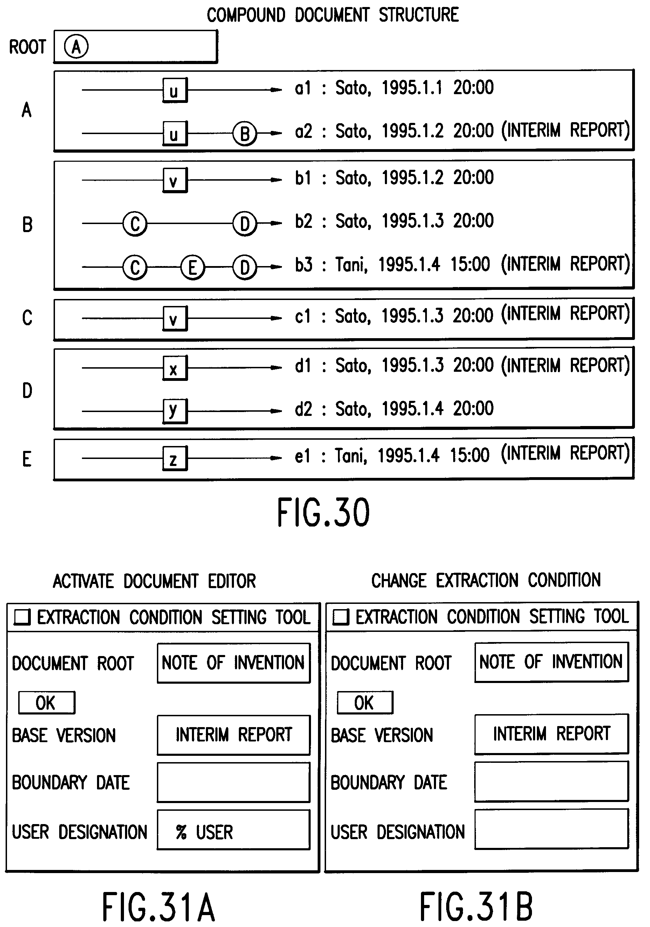

Next, Mr. Sato stores the edited document at 20:00 on January 4, 1995 in the same way as session 1. Then the document structure shown in Fig. 30 is stored in the memory 1. Thus, the new stream d2 including the content portion (y) is added to the stream set d referenced by anchor D in the document structure stored in session 4 and shown in Fig. 27. Further, the selection information associating means 4 associates a stream attribute including "Sato", which represents information of the user who edits, and "1995. 1. 4. 20:00", which represents date of data storing (updating), with stream d2.

Next, in session 6 shown in Fig. 10, Mr. Tani references the document "Note of invention" and version "interim report", which he created and stored. After that, he further references the result of editing by an author other than himself.

At 10:00 on January 5, 1995, Mr. Tani starts editing the document "Note of invention", and invokes the document editor by selecting and double-clicking the icon in the document holder in the same manner as session 2. The extraction condition setting tool shown in Fig. 31A prompts the user to designate an extraction condition of the document. Then, Mr. Tani designates "interim report" and "%user" for version information and user information, respectively. By this designation, a document constructed of structural elements (streams) which match the designated version and are updated by Mr. Tani are extracted from the memory 1 to be the object of editing.

That is to say, in accordance with the condition inputted from the selection condition designating means 8, the logical unit group selection means 9 searches for the stream associated with the attributes including "interim report", and selects the latest stream created by Mr. Tani after the version is defined. Since Mr. Sato edits the document and Mr. Tani does not edit after Mr. Tani designates the version in session 4, not the latest stream d2 created by Mr. Sato but the stream d1 at the time of designation of "interim report" is selected for the stream referenced by anchor D for "item 2".

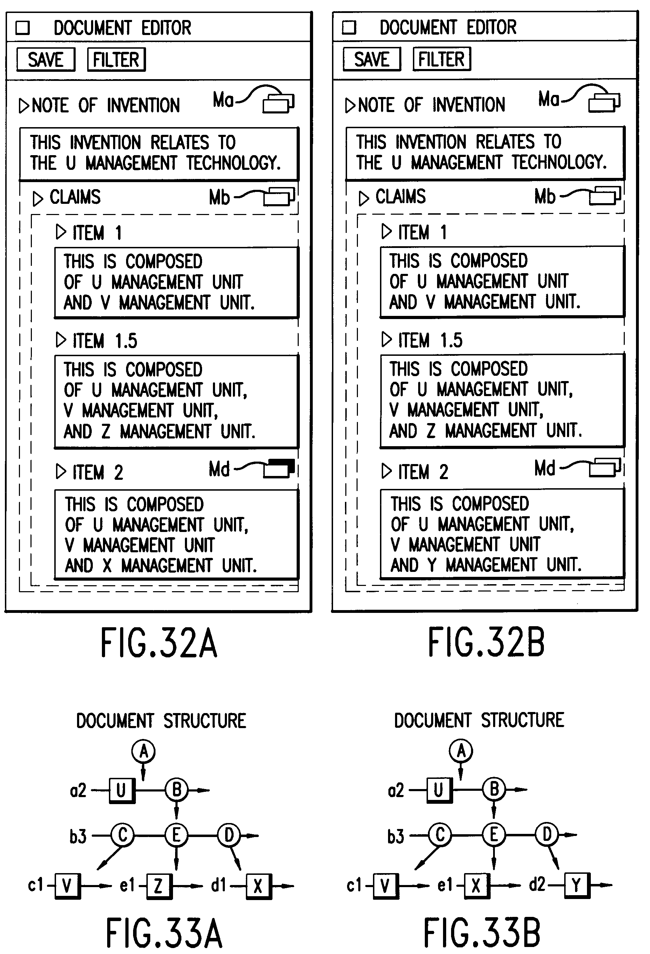

As a result, as shown in Fig. 32A, the document structure associated with "interim report" (Fig. 24) stored by Mr. Tani in session 4 is displayed on the document editor. Further, the display of the alternative marker Md corresponding to anchor D for "item 2" is inverted, that is, it shows that the newer stream created by Mr. Sato exists.

Here, by clicking a button "filter" on the document editor, the extraction condition setting tool can be invoked again. If the user changes the condition by using the invoked tool, the document structure is extracted again in accordance with the new condition. When Mr. Tani deletes "%user" from the condition shown in Fig. 31A, that is, designates the extraction condition shown in Fig. 31B, the newer stream is selected regardless of the user. As a result, the latest stream d2 created by Mr. Sato is selected for the stream referenced by anchor D for "item 2", and the document shown in Fig. 32B is displayed on the document editor.

As described above, when the first condition shown in Fig. 31A is designated, the document structure shown in Fig. 33A is extracted and displayed on the editor. After the changed condition as shown in Fig. 31B is designated, the document structure shown in Fig. 33B is extracted. Therefore, in a document structure shown in Fig. 33A, anchor D references stream d1 including content portion (x), and in a document structure shown in Fig. 33B, anchor D references stream d2 including content portion (y).

In session 6, Mr. Tani stops editing without storing the document, and the document structure stored in the memory 1 is same as the structure shown in Fig. 30.

Next, in session 7 shown in Fig. 10, Mr. Sato creates a document by adding a result of editing done by an author other than himself to the document "Note of invention" created by Mr. Sato, and stores the created document as a version "final report".

In session 7, Mr. Sato invokes the document editor at 15:00 on January 5, 1995, in the same manner as session 2, and starts editing the document "Note of invention".

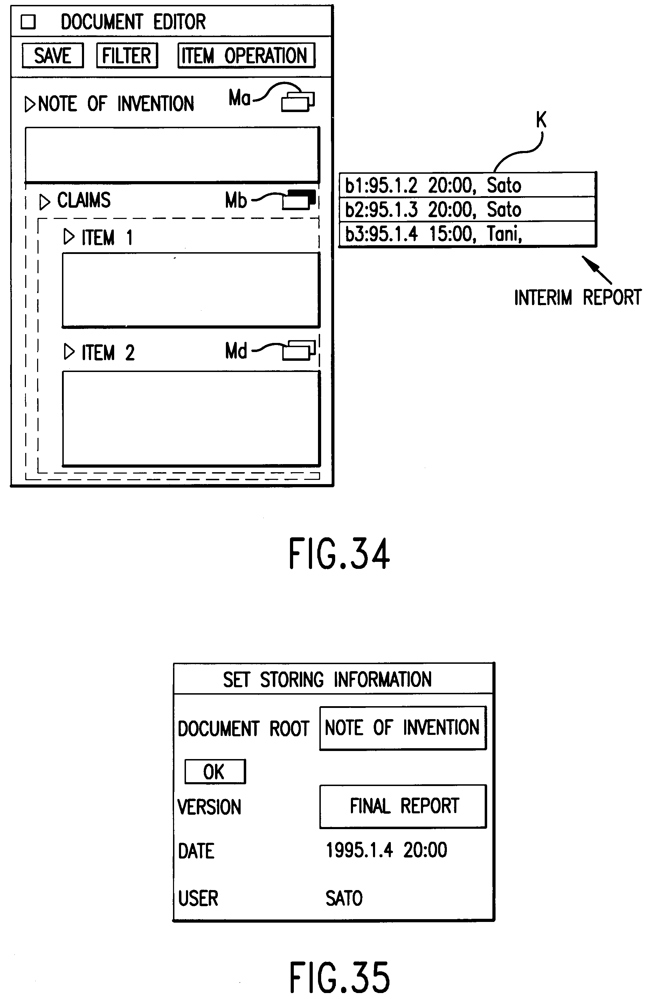

The document editor extracts the document structure stored by Mr. Sato in session 5 from the memory 1 and displays the extracted document structure as shown in Fig. 34.

The document editor displays alternative marker Mb inverted so as to show that a newer alternative exists of a current stream referenced by anchor B for "claims". If the user clicks the alternative marker Mb, alternative streams b1, b2 and b3 are displayed in menu K. If one of the streams is selected from the menu K by the logical unit group designating means 16, the logical unit group re-selection means 17 replaces the current stream with the stream selected in menu K. Further, the lower structure of the replaced stream is reconstructed in accordance with the extraction condition.

Thus, when Mr. Sato selects latest stream b3 from the alternative-menu K, the document created in session 5 is selected as the object of editing.

The editing process in session 7 replaces the document structure shown in Fig. 29 by the document structure shown in Fig. 33B on the document editor. When Mr. Sato instructs to store the document at 20:00 on January 5, 1995, an interface tool shown in Fig. 35 is displayed, and prompts the user to designate a condition for storing. When Mr. Sato designates "final report" as version information and instructs to store by using the displayed tool, an edited document structure shown in Fig. 36 is stored in the memory 1. That is to say, the selection information associating means 4 adds the version information "final report" to the attributes of streams a2, b3, c1, d2 and e1, which are extracted at the time of the storing process, in the document structure shown in Fig. 30, which is stored in session 5.

In the following, a processing to extract a document from the memory 1 and to display the extracted document on the display 14 is further explained in detail with reference to flowcharts shown in Figs. 37 through 40.

Fig. 37 shows the main processing to extract and display the document. At the beginning, the logical unit group selection means 9 selects a root anchor from the memory 1 in accordance with the instruction by the user through the selection condition designating means 8 (step S1). Then a structure in a lower position of the selected root anchor is extracted from the memory 1 and a document is displayed on the display 14 in accordance with the extracted structure (step S2).

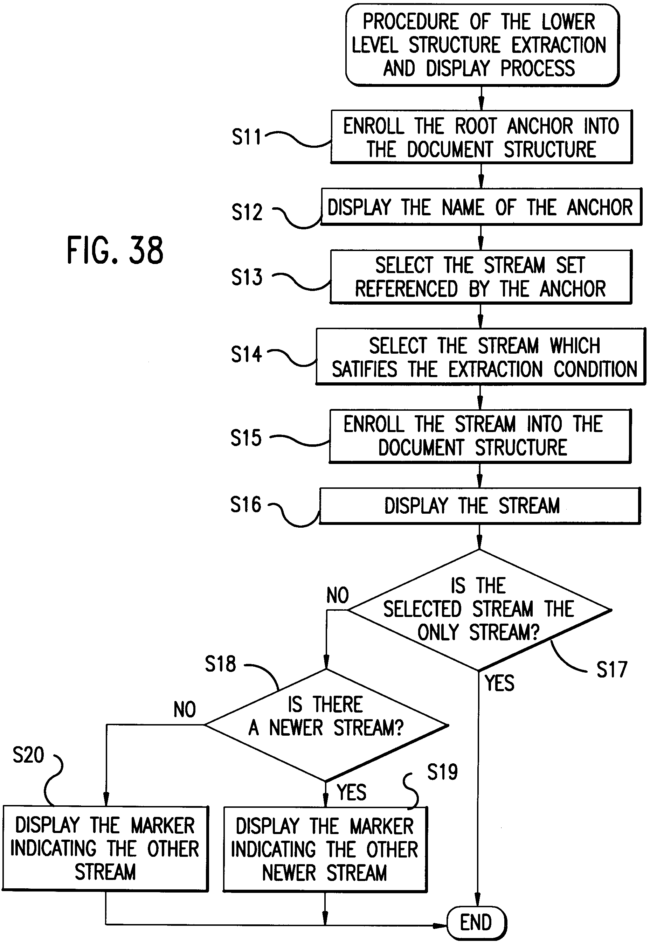

Fig. 38 shows the detailed processing to extract and display the lower level structure in the step 2 in Fig. 37.

At the beginning, the document constructing means 12 enrolls the root anchor into the document structure being constructed (step S11). Then the document structure display means 13 displays the document editor including the name of the root anchor on the screen of the display 14 (step S12).

Next, the logical unit group selection means 9 selects a stream set referenced by the root anchor from the memory 1 (step S13), and selects a stream whose attribute satisfies a condition instructed by a user through the selection condition designating means 8, from the selected stream set (step S14).

Next, the document constructing means 12 enrolls the selected stream into the document structure being constructed (step S15). The document structure display means 13 displays the selected stream (content portion) in the document editor displayed on the screen of the display 14 (step S16).

Next, the unselected information display means 15 checks whether the selected stream is the only stream in the selected stream set (step S17). If there is no other stream in the selected stream set, the processing terminates. If the anchor included in the selected stream references to the stream set in the lower level, the above-described processing is repeated for the referenced stream set and the stream included in it.

Meanwhile, if there is a stream other than the selected stream in the selected stream set, the unselected information display means 15 checks whether the other stream is newer than the selected stream in accordance with the stream attribute (step S18). If it is a newer stream, the unselected information display means 15 displays the inverted alternative marker representing the stream in the document editor on the display 14 (step S19). Meanwhile, if it is not a newer stream, the unselected information display means 15 displays the normal (uninverted) alternative marker representing the stream in the document editor on the display 14 (step S20).

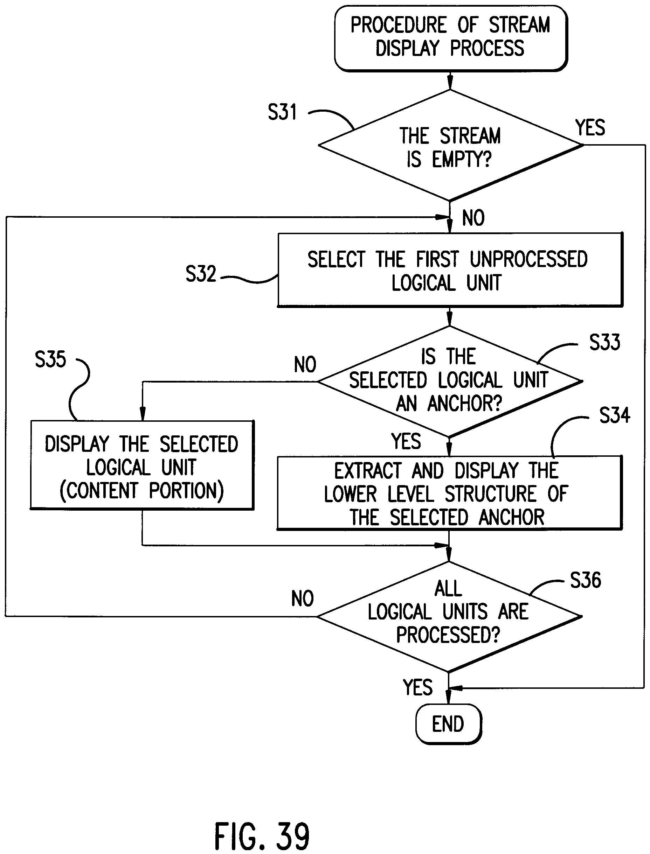

Here, the stream display processing in step S16 is further explained in detail with reference to Fig. 39.

At the beginning, it is checked whether the selected stream is an empty stream, which is a stream including neither a content portion nor an anchor (step S31). If it is an empty stream, the processing terminates. Meanwhile, if the selected stream includes logical units, one of the unprocessed logical units is selected (step S32), and it is checked whether the selected logical unit is an anchor (step S33).

As a result of this determination, if it is an anchor, a lower level structure referenced by the anchor is displayed by the processing shown in Fig. 38 (step S34). Meanwhile, if the logical unit is a content portion, the content portion is displayed (step S35).

Then, it is checked whether the above-described processing is completed for all logical units in the selected stream (step S36). If not completed, the processing after step S32 is repeatedly carried out. If completed, the stream display processing terminates.

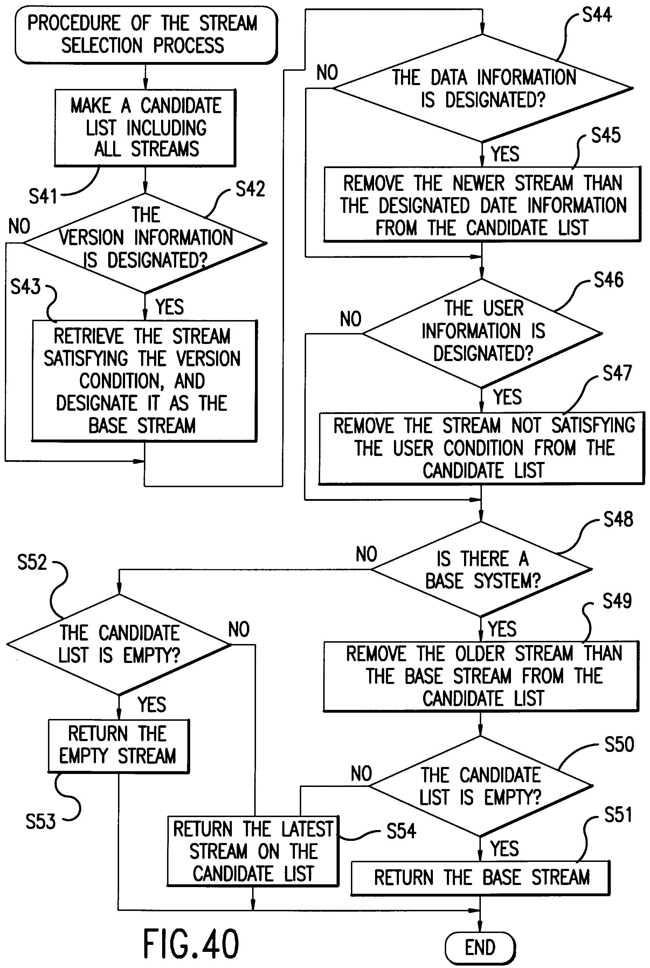

Here, the stream selection processing of step S14 is further explained in detail with reference to Fig. 40.

At the beginning, a candidate list is made of all streams in the selected stream set (step S41). Then it is checked whether the condition inputted by the selection condition designating means 8 includes version information (step S42).

As a result of the checking, if version information is designated, the stream associated with the attribute which satisfies the version condition is retrieved from the streams in the candidate list, and the retrieved stream is designated as a base stream temporarily (step S43).

Next, it is checked whether the condition inputted from the selection condition designating means 8 includes boundary date information (step S44). If the boundary date is designated, the stream associated with the attribute including a newer date than the designated boundary date is removed from the candidate list (step S47). That is, a stream edited after the boundary date which the user designates as the object of the processing, is removed.

Next, it is checked whether the condition inputted by the selection condition designating means 8 includes user information (step S46). If the user information is designated, a stream associated with the attribute which does not include the designated user information is removed from the candidate list (step S47). That is, a stream which is not edited by the user which the user designates as the object of the processing, is removed.

Next, it is checked whether a base stream is designated or not (step S48). If designated, a stream which is older than the base stream is removed from the candidate list (step S49). Then, after confirming that the candidate list is not empty (step S50), the base stream is selected as the stream which satisfies the condition inputted by the selection condition designating means 8 (step S54).

Meanwhile, as a result of the checking in step S48, if the base stream does not remain in the candidate list, it is checked whether the candidate list is empty (step S52). If the candidate list is empty, the empty stream is returned as the selected stream to imply that no stream can be selected (step S53).

As a result of the above-described checking, if the base stream is not designated and the candidate list is not empty (step S52), or if the candidate list is not empty after the stream older than the base stream is removed (step S50), the latest stream in the candidate list is returned as the selected stream (step S54).

Thus, the stream which satisfies the condition inputted from the selection condition designating means 8 is selected in accordance with the stream attribute.

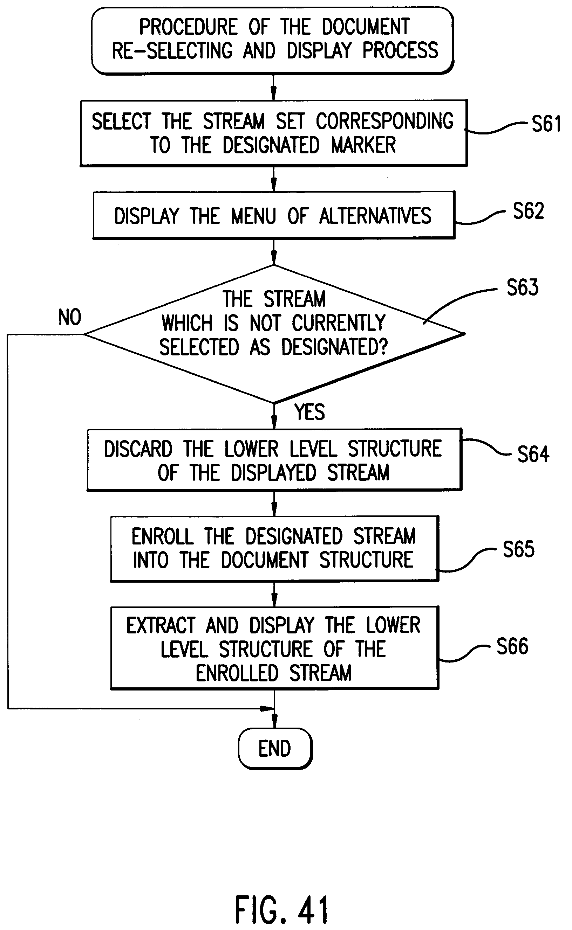

In the following, the processing to extract a document whose stream is replaced and to display the extracted document, in response to the user's selection of alternative markers, such as Ma or Mb, which are displayed on the document editor, is further described in detail with reference to the flowchart shown in Fig. 41.

At the beginning, when the user designates the alternative marker by using the logical unit group designating means 16, the unselected information display means 15 determines which stream set includes the stream corresponding to the designated marker from the document structure stored in the memory 1 (step S61), and displays streams in the determined stream set as the alternative-menu K (step S62).

Then, it is checked whether the user selects a stream other than the stream which is currently selected and displayed, from the displayed menu K by using the logical unit group designating means 16 (step S63). If another stream is selected, the logical unit group reselection means 17 discards the lower level structure of the stream which is currently displayed on the document editor (step S64), and replaces the discarded stream with the re-selected stream (step S65).

Then, the document constructing means 12 reconstructs the document including the replaced streams. The document structure display means 13 displays the reconstructed document on the document editor and processing terminates (step S66).

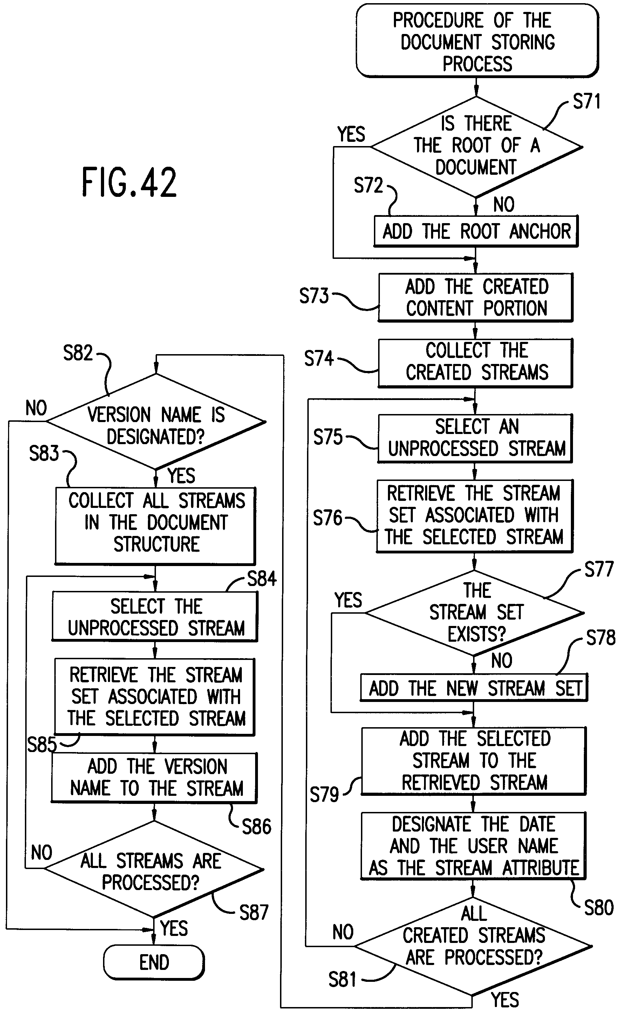

Fig. 42 is the flowchart to explain the processing to store the edited document into the memory 1.

At the beginning, it is checked whether a root anchor list, which is a list of root anchors of the document structures stored in the memory 1, includes a root anchor of the document structure which is edited by using the document editor of the document editing means 5 (step S71). As a result of the checking, if the root anchor list does not include the root anchor of the edited document structure, it means that the edited document is new in the memory 1. Therefore, the reference associating means 7 adds the root anchor of the edited document structure into the root anchor list (step S72).

Next, the reference associating means 7 associates a content portion created by the document editor with an appropriate stream (step S73), collects the created streams (step S74), and selects a stream for which the following processing has not yet been carried out, from the collection of the created streams (step S75).

Next, the reference associating means 7 retrieves a stream set associated with the selected stream from the document structures stored in the memory 1 (step S76). If the stream set exists (step S77), the selected stream is added to the stream set (step S79). Meanwhile, if the stream set does not exist (step S77), a new stream set is added to the document structure (step S78), and the selected stream is added to the new stream set (step S79).

Then, the selection information associating means 4 associates a stream attribute, such as the date or the user, with the stream added to the stream set (step S80).

The above-described series of processing is repeatedly carried out for all created streams (step S81). After that, version information included in the stream attribute is set. That is to say, in processing to store the edited document, it is checked whether version information is designated (step S82). If it is designated, all streams in the document structures stored in the memory 1 are collected (step S83), and a stream to which the following processing has not been applied is selected from the collection (step S84).

Then, the stream set which includes the selected stream is retrieved from the document structure (step S85). The version information is added to the attribute of the selected stream in the retrieved stream set (step S86). After the procedure after step S84 has been applied to all streams, the document storing process terminates (step S87).

When the stream created in the editing process is stored, the created stream is added to the stream set which includes the stream before editing, and the designated attribute is associated with the stream.

The above-described embodiment adopts an algorithm which creates a document by traversing the document structure from the root anchor, and for each encountered anchor, selecting a stream which satisfies a selection condition from the associated stream set. But other algorithms may be adopted to create a document. For example, an algorithm first selecting all streams which satisfy the selection condition from all stream sets included in the document structure, and then constructing a document with the selected streams may be adopted.

Further, in the above-described embodiment, users are prompted to designate an extraction condition every time they invoke the document editor. But processing designated by a condition that was designated at the most recent editing or a default condition, when no particular condition is designated, may be adopted. As the default condition, "%user" should be designated as user information if enabling each user to edit the document consistently under collaborative writing is the most important requirement. If enabling each user to edit the latest document at any time is the most important requirement, no condition should be designated as the default.

Furthermore, in the above-described embodiment, a new version name is added to the document structure only when editing the document. But a new version name may be added when referring to the document. This extension enables retrieving the document structure when the document is referred to.

Further, in the processing to select the stream of the above-described embodiment, it is assumed that the boundary date is after the date of the designated version. But when the boundary date is earlier than the date of the version, the stream selecting process can be carried out by adopting one of the following rules.
(1) Give the designation of the version priority over that of the boundary date.
(2) Prohibit designating a boundary date which is earlier than the date of the designated version. In this case, means to register the date of the designated version is further needed, because the date of the designated version is not registered in the stream attribute of the above-described embodiment.

Furthermore, in the above-described embodiment, when the version is designated, the version information is added to the stream attribute. But instead, a new stream may be created and added. Further, in the above-described embodiment, the version is designated by the user explicitly, but it is also possible to automatically designate the version when, for instance, printing is executed.

Further, in the above-described embodiment, an anchor name, such as "claims", is managed by associating it to the stream which includes the anchor. Therefore, if the anchor name is changed, a new stream is created. But it is also permissible to manage the anchor name independently, or to manage the anchor name as a name of the stream referenced by the anchor.

The above-described embodiment adopts a structural model which represents the document structure by using a unit called "stream" as the logical unit group. But this invention is not limited by this structural model of the document. For instance, this invention can be applied to a document structure represented by a tree structure consisting of nodes and links as described in the conventional art. In the document structure consisting of nodes and links, a set of links started from one node corresponds to the logical unit group in the present invention. In other words, the distinctive feature of this invention is to manage the version of the unit, such as the set of links or the stream, and to provide means for applying appropriate processings, such as copying, storing or adding attributes, to the unit in every editing process.

For instance, the function of the present invention can be provided by extending the invention disclosed in Hei 6-35914 as follows. A node which is not a leaf is extended to hold a list of links to lower level nodes as the content of the node, and to create associated version nodes which hold different lists of links. By this extension of the prior art, the lower node and the list of the links to the lower level nodes are treated as the reference unit and the logical unit group of the present invention, respectively.

Furthermore, this invention can adopt the data structure disclosed in the compounded document processing system explained in the prior art references (Hei. 7-44563 and Hei. 6-131343) as the document structure. In this case, a set of child node pointers included in a node in the data structure of the prior art corresponds to the logical unit group in the present invention.

The compounded document processing system provides means for compounding nodes. In addition, the present invention provides means for compounding a set of the child node pointers when editing. That is, the present invention not only compounds nodes but copies, stores and adds attributes to the set of child node pointers of the node, when the document is edited. More particularly, when the document is updated, a set of the child node pointers is automatically copied, and the date, the user and the name of the version are designated as attributes of the set of the child node pointers. Needless to say, if the user operates these processing manually, the editing operation is extremely complicated. Therefore, a subject of the present invention is, by carrying out this complicated processing automatically and appropriately by computers, to decrease the burden of the operation drastically when a plurality of authors carry out collaborative writing.

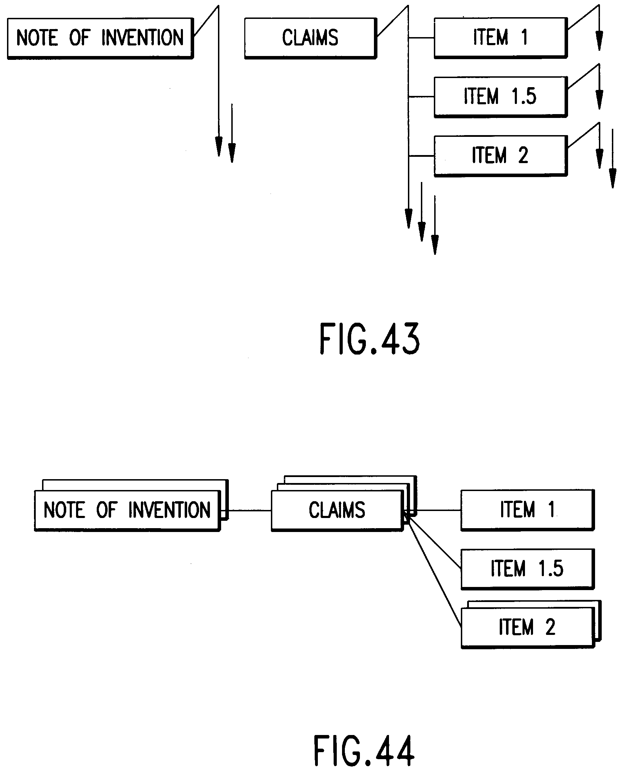

The above-described embodiment shows an example of the document structure displayed with the text in the content portion. But it is also possible to display only the document structure without displaying the contents of the text as shown in Figs. 43 and 44.

In Fig. 43, an anchor and a stream are displayed as a rectangle and an arrow, respectively. The stream is in a stream set displayed as a number of arrows equal to the number of streams to show existence of the alternatives. In Fig. 44, the document structure is displayed by a tree structure consisting of anchors which reference streams. Alternative streams referenced by an anchor are displayed as a number of shadows equal to the number of alternatives at the right shoulder of the rectangular element associated with the anchor.

As described above, in this invention, the document structure consists of the hierarchical structure of logical unit groups including a logical unit. When the editing process is carried out, a new logical unit group is created and stored in the same set as the logical unit group before editing. As a result, even if the whole structure of the document is changed by editing, the document structure before editing can be recovered. Therefore, even if an author edits the document at will without restriction on editing, the old document can be recovered without difficulties, and collaborative writing is realized without difficulties.

Further, in this invention, each of the logical unit groups is associated with selection information. As a result, the user can recover the appropriate old version of the document, carry out the editing process, or refer to any version of the document easily by simple operations, such as the designation of a selection condition including the selection information.

The invention has been described in detail with particular reference to preferred embodiments thereof, but it will be understood that variations and modifications can be effected with the spirit and scope of the invention.

## Claims

1. A document processing apparatus comprising:
logical unit storing means (2) for storing a logical unit, which is either a content unit representing a portion of contents of a structured document represented as a tree structure, or a reference unit representing structure which directly descends from the reference unit in the structured document;
logical unit group storing means (3) for storing a logical unit group, which is a set of every logical unit which directly descends from one particular reference unit in the tree structure wherein the reference unit references a group set, which is a set of logical unit groups each of which directly descends from the reference unit;
document editing means (5) for editing the structured document;
logical unit group creating means (6) for creating a new logical unit group in accordance with the editing of the structured document by the document editing means (5); and
reference associating means (7) for associating the logical unit group created by the logical unit group creating means (6) with the group set.

2. The document processing apparatus of claim 1, wherein
the reference associating means (7) associates the new logical unit group created by the logical unit group creating means (6) with a group set which includes the logical unit group before editing.

3. The document processing apparatus of claim 1, further comprising:
selection information associating means (4) for associating the logical unit group with selection information used for selecting the logical unit group;
selection condition designating means (8) for designating a selection condition including the selection information associated with the logical unit group;
logical unit group selecting means (9) for selecting the logical unit group from the logical unit group storing means (3) in accordance with the selection condition designated by the selection condition designating means (8) and the selection information associated with the logical unit group by the selection information associating means (4); and
document constructing means (12) for constructing the document in accordance with the logical unit group selected by the logical unit group selecting means (9).

4. The document processing apparatus of claim 3, wherein
the selection information associating means (4) associates version information as the selection information with the logical unit group stored in the logical unit group storing means (3).

5. The document processing apparatus of claim 3, wherein
the selection information associating means (4) associates update date information of the document as the selection information with the logical unit group stored in the logical unit group storing means (3).

6. The document processing apparatus of claim 3, wherein
the selection information associating means (4) associates user information of the document as the selection information with the logical unit group stored in the logical unit group storing means (3).

7. The document processing apparatus of claim 3, which further comprises:
the selection information associating means (4) associating at least one of version information, update date information and user information as the selection information with the logical unit group (3);
the selection condition designating means (8) designating at least one of a base version, a boundary date and user information as the selection condition;
the logical unit group selecting means (9) comprising:
searching means (10) for searching each group set for at least one logical unit group associated with the update date information after a date corresponding to the base version and before the boundary date, and user information matched with user information of the selection condition;
selecting means (11), for selecting one logical unit group from the logical unit groups found by the searching means (10) when the searching means (10) finds a plurality of logical unit groups; and
display means (14) for displaying the structure of a current structured document constructed from the logical unit group selected by the selecting means (11);

8. The document processing apparatus of claim 7, wherein
the selecting means 11 selects the logical unit group associated with the version information which is the same as the base version designated by the selection condition designating means (8), when the searching means (10) fails to find a logical unit group.

9. A method for processing the structured document of claims 1 or 3, comprising the steps of:
designating one content unit or one reference unit to be edited;
editing the designated content unit or reference unit;
creating a logical unit group, which is a set of every logical unit which directly descends from a particular reference unit in the tree structure, wherein the reference unit references a group set, which is a set of logical unit groups each of which directly descends from the reference unit;
inputting selection information used for selecting the logical unit group;
associating the inputted selection information with the created logical unit group; and
associating the created logical unit group with the group set which includes the designated content unit or reference unit.

10. A method for processing the structured document of claim 3, comprising the steps of:
storing a logical unit group, which is a set of every logical unit which directly descends from a particular reference unit in the tree structure, wherein the reference unit references a group set, which is a set of logical unit groups each of which directly descends from the reference unit;
associating the logical unit group with selection information used for selecting the logical unit group;
inputting a selection condition including the selection information associated with the logical unit group;
selecting from the logical unit groups stored, at least one logical unit group in accordance with the inputted selection condition and the selection information associated with the logical unit group; and
constructing a current structured document to be processed in accordance with the selected logical unit group.
